# EUROPEAN PATENT APPLICATION

(11) **EP 4 841 980 A1**
(43) Date of publication of application: **18.11.2026**
(21) Application number: 25739037.7
(22) Date of filing: 09.01.2025
(51) Int. Cl.: H04N 19/30, H04N 19/107, H04N 19/136, H04N 19/184, H04N 19/70

(54) **METHOD FOR DECODING IMAGE INFORMATION, METHOD FOR ENCODING IMAGE INFORMATION, METHOD FOR STORING BITSTREAM OF IMAGE INFORMATION, AND METHOD FOR TRANSMITTING BITSTREAM OF IMAGE INFORMATION**

(30) Priority: 09.01.2024 US 202463618907 P
(71) Applicant: LG Electronics Inc., Yeongdeungpo-gu Seoul 07336 (KR)
(72) Inventor: TAN, Hendry, Seoul 06772 (KR); NAM, Junghak, Seoul 06772 (KR); LIM, Jaehyun, Seoul 06772 (KR); KIM, Seunghwan, Seoul 06772 (KR)
(74) Representative: Mooser, Sebastian Thomas
(86) International application number: PCT/KR2025/000509
(87) International publication number: WO 2025/150924

(57) **Abstract**

Provided are a method and an apparatus for decoding image information, a method and an apparatus for encoding image information, a method and a storage medium for storing a bitstream of image information, and a method and an apparatus for transmitting a bitstream of image information. The method for decoding image information, according to the present disclosure, may comprise: acquiring the image information including supplemental enhancement information (SEI)-related information, wherein the SEI-related information includes SEI importance information and an SEI message; and acquiring an SEI payload of the SEI message. The SEI importance information may indicate whether removal of the SEI message from the bitstream is prohibited.

## Description

### [Technical Field]

The present disclosure relates to a method of decoding image information, a method of encoding image information, a method of storing a bitstream of image information, and a method of transmitting a bitstream of image information.

### [Background Art]

Recently, demand for high-resolution and high-quality images such as HD (High Definition) images and UHD (Ultra High Definition) images has been increasing in various fields. As image data becomes higher in resolution and quality, the amount of information or bits transmitted relatively increases compared to existing image data. The increase in the amount of information or bits transmitted causes an increase in transmission cost and storage cost.

Accordingly, a highly efficient image compression technique for effectively transmitting, storing, and reproducing high-resolution and high-quality image information is required.

### [Disclosure]

### [Technical Problem]

The present disclosure provides an encoding/decoding method and/or apparatus with improved encoding/decoding efficiency.

The present disclosure aims to signal an importance flag of a new SEI message for a coded video bitstream.

The present disclosure aims to design a new SEI data structure to prevent SEI messages from being dropped by MANEs (media-aware network elements).

The present disclosure provides a method of storing a bitstream generated by an encoding method according to the present disclosure and/or a computer-readable recording medium.

The present disclosure provides a method of transmitting a bitstream generated by an encoding method according to the present disclosure and/or an apparatus therefor.

The technical problems to be achieved in the present disclosure are not limited to the technical problems mentioned above, and other technical problems not mentioned will be clearly understood by those skilled in the art to which the present disclosure belongs from the description below.

### [Technical Solution]

A method of decoding image information according to an aspect of the present disclosure may comprise obtaining the image information comprising SEI (supplemental enhancement information) related information, the SEI related information comprising SEI importance information and an SEI message, and obtaining an SEI payload of the SEI message. The SEI importance information may indicate whether removal of the SEI message from a bitstream is prohibited.

An apparatus for decoding image information according to an aspect of the present disclosure comprises a memory and a processor coupled to the memory, wherein the processor obtains the image information comprising SEI (supplemental enhancement information) related information, the SEI related information comprising SEI importance information and an SEI message, and obtains an SEI payload of the SEI message. The SEI importance information may indicate whether removal of the SEI message from a bitstream is prohibited.

A method of encoding image information according to an aspect of the present disclosure may comprise generating an SEI (supplemental enhancement information) payload, generating an SEI message comprising the SEI payload, generating SEI related information comprising the SEI message, the SEI related information comprising SEI importance information and the SEI message, and encoding the image information comprising the SEI related information. The SEI importance information may indicate whether removal of the SEI message from a bitstream is prohibited.

An apparatus for encoding image information according to an aspect of the present disclosure comprises a memory and a processor coupled to the memory, wherein the processor generates an SEI (supplemental enhancement information) payload, generates an SEI message comprising the SEI payload, generates SEI related information comprising the SEI message, the SEI related information comprising SEI importance information and the SEI message, and encodes the image information comprising the SEI related information. The SEI importance information may indicate whether removal of the SEI message from a bitstream is prohibited.

A method of storing a bitstream of image information according to an aspect of the present disclosure may comprise obtaining the bitstream of the image information, and storing data comprising the bitstream in a computer-readable storage medium. The image information may comprise SEI (supplemental enhancement information) related information. The SEI related information may comprise SEI importance information and an SEI message. The SEI importance information may indicate whether removal of the SEI message from the bitstream is prohibited.

A computer-readable storage medium according to an aspect of the present disclosure may store data comprising a bitstream of image information. The image information may comprise SEI (supplemental enhancement information) related information. The SEI related information may comprise SEI importance information and an SEI message. The SEI importance information may indicate whether removal of the SEI message from the bitstream is prohibited.

A method of transmitting a bitstream of image information according to an aspect of the present disclosure may comprise obtaining the bitstream of the image information, and transmitting data comprising the bitstream. The image information may comprise SEI (supplemental enhancement information) related information. The SEI related information may comprise SEI importance information and an SEI message. The SEI importance information may indicate whether removal of the SEI message from the bitstream is prohibited.

An apparatus for transmitting a bitstream of image information according to an aspect of the present disclosure may comprise a processor configured to obtain the bitstream of the image information, and a transmitter configured to transmit data comprising the bitstream. The image information may comprise SEI (supplemental enhancement information) related information. The SEI related information may comprise SEI importance information and an SEI message. The SEI importance information may indicate whether removal of the SEI message from the bitstream is prohibited.

With respect to the method/apparatus for decoding the image information, the method/apparatus for encoding the image information, the method/storage medium for storing the bitstream of the image information, and the method/apparatus for transmitting the bitstream of the image information,

with respect to the method/apparatus for decoding the image information, the method/apparatus for encoding the image information, the method/storage medium for storing the bitstream of the image information, and the method/apparatus for transmitting the bitstream of the image information, the SEI importance information may be placed first in the SEI related information.

With respect to the method/apparatus for decoding the image information, the method/apparatus for encoding the image information, the method/storage medium for storing the bitstream of the image information, and the method/apparatus for transmitting the bitstream of the image information, the SEI importance information may comprise an SEI importance flag placed at a first bit in the SEI related information.

With respect to the method/apparatus for decoding the image information, the method/apparatus for encoding the image information, the method/storage medium for storing the bitstream of the image information, and the method/apparatus for transmitting the bitstream of the image information, the SEI importance information may be included in the SEI message.

With respect to the method/apparatus for decoding the image information, the method/apparatus for encoding the image information, the method/storage medium for storing the bitstream of the image information, and the method/apparatus for transmitting the bitstream of the image information, the SEI importance information may comprise an SEI importance flag placed at a first bit in the SEI message.

The features briefly summarized above with respect to the present disclosure are merely exemplary aspects of the detailed description of the present disclosure set forth below, and do not limit the scope of the present disclosure.

### [Advantageous Effects]

According to the present disclosure, an encoding/decoding method and/or apparatus with improved encoding/decoding efficiency can be provided.

According to the present disclosure, important SEIs can be prevented from being arbitrarily dropped by MANEs while also addressing the issue of large SEI payloads.

According to the present disclosure, a method of storing a bitstream generated by the encoding method according to the present disclosure and/or a computer-readable recording medium can be provided.

According to the present disclosure, a method of transmitting a bitstream generated by the encoding method according to the present disclosure and/or an apparatus therefor can be provided.

The effects obtainable from the present disclosure are not limited to the effects mentioned above, and other effects not mentioned will be clearly understood by those skilled in the art to which the present disclosure belongs from the description below.

### [Description of Drawings]

FIG. 1 is a diagram schematically illustrating a video coding system to which an embodiment according to the present disclosure may be applied.
FIG. 2 is a diagram schematically illustrating an encoding apparatus to which an embodiment according to the present disclosure may be applied.
FIG. 3 is a diagram schematically illustrating a decoding apparatus to which an embodiment according to the present disclosure may be applied.
FIG. 4 exemplarily illustrates a hierarchical structure for a coded video/image.
FIG. 5 is a diagram for explaining an interleaved scheme for deriving a luma channel.
FIG. 6 is a diagram illustrating a method of decoding image information according to an embodiment of the present disclosure.
FIG. 7 is a diagram illustrating a method of encoding image information according to an embodiment of the present disclosure.
FIG. 8 is a diagram exemplarily illustrating a content streaming system to which an embodiment according to the present disclosure may be applied.

### [Modes of the Invention]

Hereinafter, embodiments of the present disclosure will be described in detail with reference to the accompanying drawings so that a person having ordinary skill in the art to which the present disclosure pertains can easily carry out the present disclosure. However, the present disclosure may be implemented in various different forms and is not limited to the embodiments described herein.

In describing the embodiments of the present disclosure, if it is determined that a detailed description of a known configuration or function may obscure the gist of the present disclosure, the detailed description thereof will be omitted. In addition, in the drawings, parts unrelated to the description of the present disclosure are omitted, and similar reference numerals are assigned to similar parts.

In the present disclosure, when a component is referred to as being "connected to," "coupled to," or "linked with" another component, this may include not only a direct connection relationship but also an indirect connection relationship in which another component exists therebetween. In addition, when a component is referred to as "including" or "having" another component, this does not exclude another component but may further include another component unless otherwise stated.

In the present disclosure, terms such as first, second, etc. are used only for the purpose of distinguishing one component from another, and do not limit the order or importance between components unless specifically mentioned. Accordingly, within the scope of the present disclosure, a first component in one embodiment may be referred to as a second component in another embodiment, and likewise, a second component in one embodiment may be referred to as a first component in another embodiment.

In the present disclosure, components that are distinguished from each other are intended to clearly describe respective features, and do not necessarily mean that the components are separated. That is, a plurality of components may be integrated to form a single hardware or software unit, or a single component may be distributed to form a plurality of hardware or software units. Accordingly, even if not separately mentioned, such integrated or distributed embodiments are also included within the scope of the present disclosure.

In the present disclosure, components described in various embodiments do not necessarily mean essential components, and some may be optional components. Accordingly, an embodiment composed of a subset of the components described in one embodiment is also included within the scope of the present disclosure. In addition, embodiments that further include other components in addition to the components described in the various embodiments are also included within the scope of the present disclosure.

The present disclosure relates to encoding and decoding of an image. For example, the methods and embodiments disclosed in this document may be applied to methods disclosed in the VVC (versatile video coding) standard, the EVC (essential video coding) standard, the AV1 (AOMedia Video 1) standard, the AVS2 (2nd generation of audio video coding standard), or a next-generation video/image coding standard (e.g., H.267 or H.268, etc.).

The present disclosure presents various embodiments regarding video/image coding, and unless otherwise mentioned, the embodiments may be performed in combination with each other.

Terms used in the present disclosure may have ordinary meanings commonly used in the technical field to which the present disclosure belongs, unless newly defined in the present disclosure.

In the present disclosure, a "picture" generally means a unit representing one image at a specific time period, and a slice/tile is a coding unit constituting a part of a picture, and one picture may be composed of one or more slices/tiles. In addition, a slice/tile may include one or more coding tree units (CTUs). One picture may be composed of one or more tile groups. One tile group may include one or more tiles. A brick may represent a rectangular region of CTU rows within a tile in a picture. In this document, a tile group and a slice may be used interchangeably. For example, in this document, a tile group/tile group header may be referred to as a slice/slice header.

In the present disclosure, a "pixel" or a "pel" may mean a minimum unit constituting one picture (or image). In addition, a "sample" may be used as a term corresponding to a pixel. A sample may generally represent a pixel or a pixel value, and may represent only a pixel/pixel value of a luma component, or may represent only a pixel/pixel value of a chroma component.

In the present disclosure, a "unit" may represent a basic unit of image processing. The unit may include at least one of a specific region of a picture and information related to the region. One unit may include one luma block and two chroma (e.g., Cb, Cr) blocks. The unit may be used interchangeably with terms such as "sample array," "block," or "area," depending on the case. In a general case, an MxN block may include samples (or sample array) or a set (or array) of transform coefficients composed of M columns and N rows.

In the present disclosure, a "current block" may mean one of a "current coding block," a "current coding unit," an "encoding target block," a "decoding target block," or a "processing target block." When prediction is performed, a "current block" may mean a "current prediction block" or a "prediction target block." When transform (inverse transform)/quantization (dequantization) is performed, a "current block" may mean a "current transform block" or a "transform target block." When filtering is performed, a "current block" may mean a "filtering target block."

In the present disclosure, a "current block" may mean a block including both a luma component block and a chroma component block or "a luma block of a current block" unless there is an explicit description that it is a chroma block. The luma component block of the current block may be expressed by including an explicit description that it is a luma component block, such as "luma block" or "current luma block." In addition, the chroma component block of the current block may be expressed by including an explicit description that it is a chroma component block, such as "chroma block" or "current chroma block."

In the present disclosure, "/" and "," may be interpreted as "and/or." For example, "A/B" and "A, B" may be interpreted as "A and/or B." In addition, "A/B/C" and "A, B, C" may mean "at least one of A, B, and/or C."

In the present disclosure, "or" may be interpreted as "and/or." For example, "A or B" may mean 1) only "A," 2) only "B," or 3) "A and B." Alternatively, in the present disclosure, "or" may mean "additionally or alternatively."

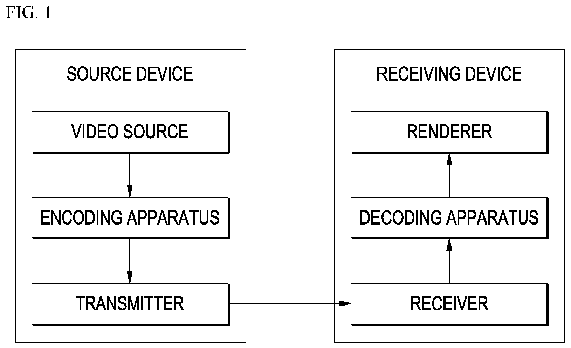

FIG. 1 is a diagram schematically illustrating a video/image coding system to which an embodiment according to the present disclosure may be applied.

Referring to FIG. 1, the video/image coding system may include a first device (source device) and a second device (receiving device). The source device may transmit encoded video/image or data to the receiving device through a digital storage medium or a network in the form of a file or streaming.

The source device may include a video source, an encoding apparatus, and a transmitter. The receiving device may include a receiver, a decoding apparatus, and a renderer. The encoding apparatus may be called a video/image encoding apparatus, and the decoding apparatus may be called a video/image decoding apparatus. The transmitter may be included in the encoding apparatus. The receiver may be included in the decoding apparatus. The renderer may include a display unit, and the display unit may be configured as a separate device or an external component.

The video source may acquire a video/image through a process of capturing, synthesizing, or generating a video/image. The video source may include a video/image capture device and/or a video/image generation device. The video/image capture device may include, for example, one or more cameras, a video/image archive including previously captured video/images, and the like. The video/image generation device may include, for example, a computer, a tablet, a smartphone, and the like, and may (electronically) generate a video/image. For example, a virtual video/image may be generated through a computer or the like, and in this case, the video/image capture process may be replaced by a process of generating related data.

The encoding apparatus may encode an input video/image. The encoding apparatus may perform a series of procedures such as prediction, transform, and quantization for compression and coding efficiency. The encoded data (encoded video/image information) may be output in the form of a bitstream.

The transmitter may transmit the encoded video/image information or data output in the form of a bitstream to the receiver of the receiving device through a digital storage medium or a network in the form of a file or streaming. The digital storage medium may include various storage media such as USB, SD, CD, DVD, Blu-ray, HDD, and SSD. The transmitter may include an element for generating a media file through a predetermined file format, and may include an element for transmission through a broadcast/communication network. The receiver may receive/extract the bitstream and transmit it to the decoding apparatus.

The decoding apparatus may decode a video/image by performing a series of procedures such as dequantization, inverse transform, and prediction corresponding to the operation of the encoding apparatus.

The renderer may render the decoded video/image. The rendered video/image may be displayed through the display unit.

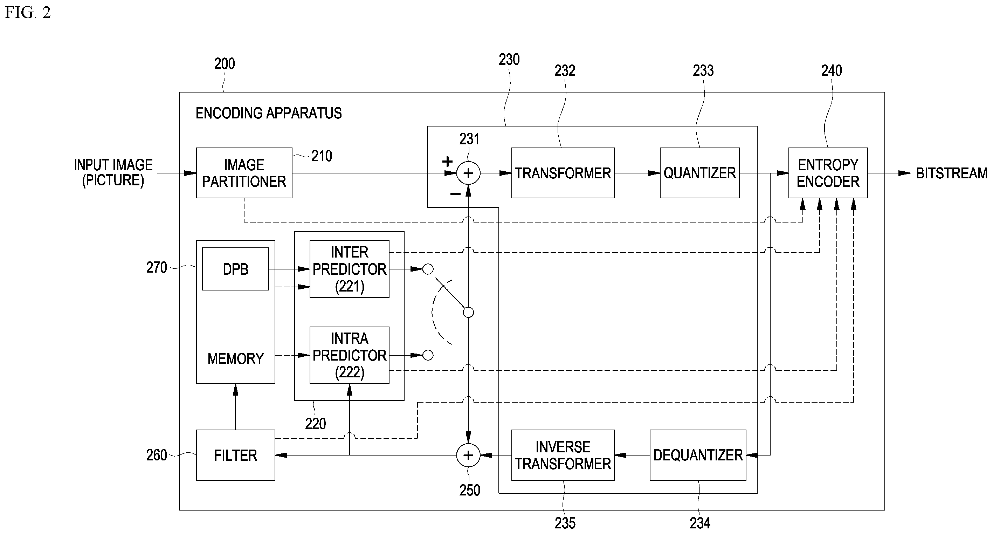

FIG. 2 is a diagram schematically illustrating an encoding apparatus to which an embodiment according to the present disclosure may be applied.

As illustrated in FIG. 2, the encoding apparatus 200 may include an image partitioner 210, a predictor 220, a residual processor 230, an entropy encoder 240, an adder 250, a filter 260, and a memory 270. The predictor 220 may include an inter predictor 221 and an intra predictor 222. The residual processor 230 may include a transformer 232, a quantizer 233, a dequantizer 234, and an inverse transformer 235. The residual processor 230 may further include a subtractor 231. The adder 250 may be called a reconstructor or a reconstructed block generator. The image partitioner 210, the predictor 220, the residual processor 230, the entropy encoder 240, the adder 250, and the filter 260 described above may be configured by one or more hardware components (e.g., an encoder chipset or a processor) according to an embodiment. In addition, the memory 270 may include a decoded picture buffer (DPB), and may also be configured by a digital storage medium. The hardware component may further include the memory 270 as an internal/external component.

The image partitioner 210 may partition an input image (or a picture, a frame) input to the encoding apparatus 200 into one or more processing units. As an example, the processing unit may be referred to as a coding unit (CU). The coding unit may be obtained by recursively partitioning a coding tree unit (CTU) or a largest coding unit (LCU) according to a QT/BT/TT (Quad-tree/binary-tree/ternary-tree) structure. For example, one coding unit may be partitioned into a plurality of coding units of a deeper depth based on a quad-tree structure, a binary-tree structure, and/or a ternary-tree structure. For partitioning of the coding unit, the quad-tree structure may be applied first, and the binary-tree structure and/or the ternary-tree structure may be applied later. The coding procedure according to the present disclosure may be performed based on a final coding unit that is no longer partitioned. In this case, based on coding efficiency according to image characteristics, the largest coding unit may be used as the final coding unit, or, if necessary, the largest coding unit may be recursively partitioned into coding units of a lower depth, and a coding unit of an optimal size may be used as the final coding unit. Here, the coding procedure may include procedures such as prediction, transform, and/or reconstruction, which will be described later. As another example, the processing unit of the coding procedure may be a prediction unit (PU) or a transform unit (TU). The prediction unit and the transform unit may each be partitioned or split from the final coding unit. The prediction unit may be a unit of sample prediction, and the transform unit may be a unit for deriving a transform coefficient and/or a unit for deriving a residual signal from the transform coefficient.

The unit may be used interchangeably with terms such as block or area, depending on the case. In a general case, an MxN block may represent a set of samples or transform coefficients composed of M columns and N rows. A sample may generally represent a pixel or a pixel value, and may represent only a pixel/pixel value of a luma component, or may represent only a pixel/pixel value of a chroma component. A sample may be used as a term corresponding to a pixel or a pel of one picture (or image).

The encoding apparatus 200 may generate a residual signal (residual block, residual sample array) by subtracting a prediction signal (predicted block, prediction sample array) output from the inter predictor 221 or the intra predictor 222 from the input image signal (original block, original sample array), and the generated residual signal is transmitted to the transformer 232. In this case, as illustrated, the unit that subtracts the prediction signal (prediction block, prediction sample array) from the input image signal (original block, original sample array) within the encoding apparatus 200 may be called the subtractor 231. The predictor 220 may perform prediction on a processing target block (current block) and generate a predicted block including prediction samples for the current block. The predictor 220 may determine whether intra prediction or inter prediction is applied on a current block or CU basis. The predictor 220 may generate various information regarding prediction of the current block and transmit it to the entropy encoder 240. The information regarding prediction may be encoded in the entropy encoder 240 and output in the form of a bitstream.

The intra predictor 222 may predict a current block by referring to samples in the current picture. The referenced samples may be located in the neighborhood of the current block or located away therefrom, according to the intra prediction mode and/or the intra prediction technique. The intra prediction modes may include a plurality of non-directional modes and a plurality of directional modes. The non-directional modes may include, for example, a DC mode and a planar mode. The directional modes may include, for example, 33 directional prediction modes or 65 directional prediction modes, depending on the degree of detail of the prediction direction. However, this is an example, and more or fewer directional prediction modes may be used depending on the setting. The intra predictor 222 may determine a prediction mode applied to the current block by using a prediction mode applied to a neighboring block.

The inter predictor 221 may derive a predicted block for the current block based on a reference block (reference sample array) specified by a motion vector on a reference picture. At this time, in order to reduce the amount of motion information transmitted in the inter prediction mode, the motion information may be predicted on a block, subblock, or sample basis based on the correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block existing in the current picture and a temporal neighboring block existing in the reference picture. The reference picture including the reference block and the reference picture including the temporal neighboring block may be the same or different. The temporal neighboring block may be called by names such as collocated reference block, collocated CU (colCU), and the like. The reference picture including the temporal neighboring block may be called a collocated picture (colPic). For example, the inter predictor 221 may construct a motion information candidate list based on the neighboring blocks, and generate information indicating which candidate is used to derive the motion vector and/or the reference picture index of the current block. Inter prediction may be performed based on various prediction modes. For example, in the case of a skip mode and a merge mode, the inter predictor 221 may use motion information of a neighboring block as motion information of the current block. In the case of the skip mode, unlike the merge mode, the residual signal may not be transmitted. In the case of a motion vector prediction (MVP) mode, a motion vector of a neighboring block may be used as a motion vector predictor, and a motion vector of the current block may be signaled by encoding a motion vector difference and an indicator for the motion vector predictor. The motion vector difference may mean a difference between the motion vector of the current block and the motion vector predictor.

The predictor 220 may generate a prediction signal based on various prediction methods and/or prediction techniques described below. For example, the predictor 220 may apply intra prediction or inter prediction for prediction of the current block, and may also apply intra prediction and inter prediction simultaneously. A prediction method that simultaneously applies intra prediction and inter prediction for prediction of the current block may be called combined inter and intra prediction (CIIP). In addition, the predictor 220 may be based on an intra block copy (IBC) prediction mode or a palette mode for prediction of a block. The IBC prediction mode or the palette mode may be used, for example, for content image/video coding such as games, e.g., screen content coding (SCC). IBC basically performs prediction within the current picture, but may be performed similarly to inter prediction in that a reference block is derived within the current picture. That is, IBC may use at least one of the inter prediction techniques described in this document. The palette mode may be regarded as an example of intra coding or intra prediction. When the palette mode is applied, sample values within a picture may be signaled based on information on a palette table and a palette index.

The prediction signal generated through the predictor 220 may be used to generate a reconstructed signal or to generate a residual signal. The subtractor 231 may generate a residual signal (residual block, residual sample array) by subtracting the prediction signal (predicted block, prediction sample array) output from the predictor 220 from the input image signal (original block, original sample array). The generated residual signal may be transmitted to the transformer 232.

The transformer 232 may generate transform coefficients by applying a transform technique to the residual signal. For example, the transform technique may include at least one of a discrete cosine transform (DCT), a discrete sine transform (DST), a Karhunen-Loève transform (KLT), a graph-based transform (GBT), or a conditionally non-linear transform (CNT). Here, GBT refers to a transform obtained from a graph when relationship information between pixels is represented by the graph. CNT refers to a transform obtained based on a prediction signal generated using all previously reconstructed pixels. The transform process may be applied to a pixel block having a square equal size, or may be applied to a block of a variable size that is not square.

The quantizer 233 may quantize the transform coefficients and transmit them to the entropy encoder 240. The entropy encoder 240 may encode the quantized signal (information on quantized transform coefficients) and output it as a bitstream. The information on the quantized transform coefficients may be called residual information. The quantizer 233 may rearrange the quantized transform coefficients in block form into a one-dimensional vector form based on a coefficient scan order, and may generate the information on the quantized transform coefficients based on the quantized transform coefficients in the one-dimensional vector form.

The entropy encoder 240 may perform various encoding methods such as, for example, exponential Golomb, context-adaptive variable length coding (CAVLC), and context-adaptive binary arithmetic coding (CABAC). The entropy encoder 190 may encode information necessary for video/image reconstruction (e.g., values of syntax elements, etc.) other than the quantized transform coefficients together or separately. The encoded information (e.g., encoded video/image information) may be transmitted or stored in the form of a bitstream on a network abstraction layer (NAL) unit basis. The video/image information may further include information on various parameter sets such as an adaptation parameter set (APS), a picture parameter set (PPS), a sequence parameter set (SPS), or a video parameter set (VPS). The video/image information may further include general constraint information. The signaled information, transmitted information, and/or syntax elements mentioned in the present disclosure may be included in the video/image information. The video/image information may be encoded through the above-described encoding procedure and included in the bitstream.

The bitstream may be transmitted through a network or stored in a digital storage medium. Here, the network may include a broadcast network and/or a communication network, and the digital storage medium may include various storage media such as USB, SD, CD, DVD, Blu-ray, HDD, and SSD. A transmitter (not illustrated) for transmitting the signal output from the entropy encoder 240 and/or a storage unit (not illustrated) for storing the signal may be provided as an internal/external element of the encoding apparatus 200, or the transmitter may be provided as a component of the entropy encoder 240.

The quantized transform coefficients output from the quantizer 233 may be used to generate a residual signal. For example, by applying dequantization and inverse transform to the quantized transform coefficients through the dequantizer 234 and the inverse transformer 235, the residual signal (residual block or residual samples) may be reconstructed.

Meanwhile, luma mapping with chroma scaling (LMCS) may be applied in the picture encoding and/or reconstruction process.

The adder 250 may generate a reconstructed signal (reconstructed picture, reconstructed block, reconstructed sample array) by adding the reconstructed residual signal to the prediction signal output from the inter predictor 221 or the intra predictor 222. When there is no residual for the processing target block, such as when the skip mode is applied, the predicted block may be used as the reconstructed block. The adder 250 may be called a reconstructor or a reconstructed block generator. The generated reconstructed signal may be used for intra prediction of the next processing target block within the current picture, and may also be used for inter prediction of the next picture through filtering as described later.

The filter 260 may improve subjective/objective image quality by applying filtering to the reconstructed signal. For example, the filter 260 may generate a modified reconstructed picture by applying various filtering methods to the reconstructed picture, and may store the modified reconstructed picture in the memory 270, specifically, the DPB of the memory 170. The various filtering methods may include, for example, deblocking filtering, a sample adaptive offset, an adaptive loop filter, a bilateral filter, and the like. The filter 260 may generate various information regarding filtering and transmit it to the entropy encoder 240, as will be described later in the description of each filtering method. The information regarding filtering may be encoded in the entropy encoder 240 and output in the form of a bitstream.

The modified reconstructed picture transmitted to the memory 270 may be used as a reference picture in the inter predictor 221. Through this, when inter prediction is applied, the encoding apparatus 200 may avoid prediction mismatch between the encoding apparatus 200 and the decoding apparatus, and may also improve coding efficiency.

The DPB in the memory 270 may store the modified reconstructed picture for use as a reference picture in the inter predictor 221. The memory 270 may store motion information of a block from which motion information in the current picture is derived (or encoded) and/or motion information of blocks in an already reconstructed picture. The stored motion information may be transmitted to the inter predictor 221 to be utilized as motion information of a spatial neighboring block or motion information of a temporal neighboring block. The memory 270 may store reconstructed samples of reconstructed blocks in the current picture, and may transmit them to the intra predictor 222.

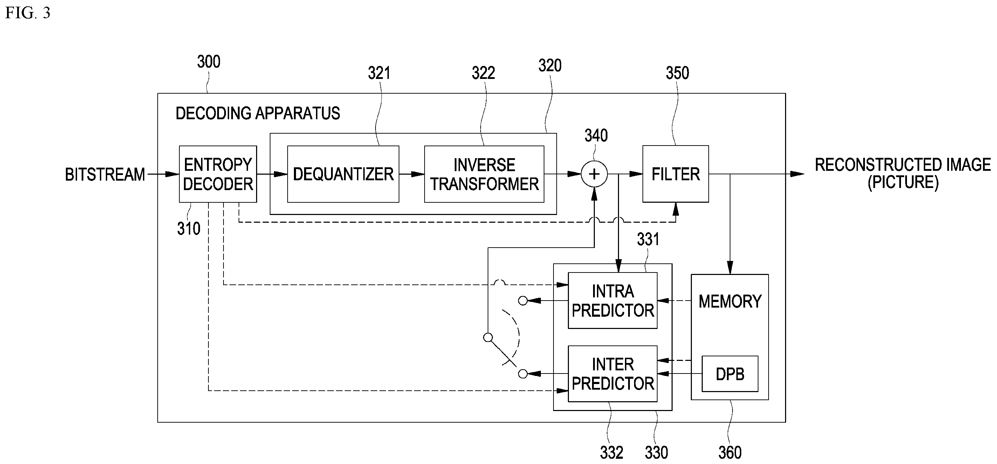

FIG. 3 is a diagram schematically illustrating a decoding apparatus to which an embodiment according to the present disclosure may be applied.

As illustrated in FIG. 3, the decoding apparatus 300 may include an entropy decoder 310, a residual processor 320, a predictor 330, an adder 340, a filter 350, and a memory 360. The predictor 330 may include an inter predictor 332 and an intra predictor 331. The residual processor 320 may include a dequantizer 321 and an inverse transformer 321. The entropy decoder 310, the residual processor 320, the predictor 330, the adder 340, and the filter 350 described above may be configured by one hardware component (e.g., a decoder chipset or a processor) according to an embodiment. In addition, the memory 360 may include a decoded picture buffer (DPB), and may also be configured by a digital storage medium. The hardware component may further include the memory 360 as an internal/external component.

When a bitstream including video/image information is input, the decoding apparatus 300 may reconstruct an image by performing a process corresponding to the process performed by the encoding apparatus 200 of FIG. 2. For example, the decoding apparatus 300 may perform decoding using a processing unit applied in the encoding apparatus 200. Accordingly, the processing unit of decoding may be, for example, a coding unit. The coding unit may be a coding tree unit, or may be obtained by partitioning the largest coding unit according to a quad-tree structure, a binary-tree structure, and/or a ternary-tree structure. The reconstructed image signal decoded and output through the decoding apparatus 300 may be played back through a playback device (not illustrated).

The decoding apparatus 300 may receive the signal output from the encoding apparatus 200 of FIG. 2 in the form of a bitstream. The received signal may be decoded through the entropy decoder 310. For example, the entropy decoder 310 may derive information (e.g., video/image information) necessary for image reconstruction (or picture reconstruction) by parsing the bitstream. The video/image information may further include information on various parameter sets such as an adaptation parameter set (APS), a picture parameter set (PPS), a sequence parameter set (SPS), or a video parameter set (VPS). The video/image information may further include general constraint information. The decoding apparatus 300 may further decode the picture based on the information on the parameter set and/or the general constraint information. The signaled/received information and/or syntax elements described later may be decoded through the decoding procedure and obtained from the bitstream. For example, the entropy decoder 310 may decode information in the bitstream based on a coding method such as exponential Golomb coding, CAVLC, or CABAC, and output values of syntax elements necessary for image reconstruction and quantized values of transform coefficients for the residual. More specifically, the CABAC entropy decoding method may receive a bin corresponding to each syntax element in the bitstream, determine a context model using decoding target syntax element information and decoding information of the neighboring and decoding target blocks or information of a symbol/bin decoded in the previous stage, and perform arithmetic decoding of the bin by predicting an occurrence probability of the bin according to the determined context model, thereby generating a symbol corresponding to the value of each syntax element. At this time, the CABAC entropy decoding method may update the context model using the information of the decoded symbol/bin for the context model of the next symbol/bin after determining the context model. Among the information decoded by the entropy decoder 310, the information regarding prediction is provided to the predictor 330, and the residual values on which entropy decoding was performed by the entropy decoder 310, that is, the quantized transform coefficients and related parameter information, may be input to the residual processor 320. The residual processor 320 may derive a residual signal (residual block, residual samples, residual sample array). In addition, among the information decoded by the entropy decoder 310, information regarding filtering may be provided to the filter 350. Meanwhile, a receiver (not illustrated) for receiving the signal output from the encoding apparatus may be further configured as an internal/external element of the decoding apparatus 300, or the receiver may be a component of the entropy decoder 310. Meanwhile, the decoding apparatus according to this document may be called a video/image/picture decoding apparatus, and the decoding apparatus may be classified into an information decoder (video/image/picture information decoder) and a sample decoder (video/image/picture sample decoder). The information decoder may include the entropy decoder 310, and the sample decoder may include at least one of the dequantizer 321, the inverse transformer 322, the adder 340, the filter 350, the memory 360, the inter predictor 332, and the intra predictor 331.

The dequantizer 321 may dequantize the quantized transform coefficients and output the transform coefficients. The dequantizer 321 may rearrange the quantized transform coefficients in a two-dimensional block form. In this case, the rearrangement may be performed based on the coefficient scan order performed in the encoding apparatus 200. The dequantizer 321 may perform dequantization on the quantized transform coefficients using a quantization parameter (e.g., quantization step size information), and obtain transform coefficients.

The inverse transformer 322 may obtain a residual signal (residual block, residual sample array) by inversely transforming the transform coefficients.

The predictor 330 may generate a prediction signal based on various prediction methods described below. For example, the predictor may apply intra prediction or inter prediction for prediction of one block, and may also apply intra prediction and inter prediction simultaneously. This may be called combined inter and intra prediction (CIIP). In addition, the predictor may be based on an intra block copy (IBC) prediction mode or a palette mode for prediction of a block. The IBC prediction mode or the palette mode may be used, for example, for content image/video coding such as games, e.g., screen content coding (SCC). IBC basically performs prediction within the current picture, but may be performed similarly to inter prediction in that a reference block is derived within the current picture. That is, IBC may use at least one of the inter prediction techniques described in this document. The palette mode may be regarded as an example of intra coding or intra prediction. When the palette mode is applied, information on the palette table and the palette index may be included in the video/image information and signaled.

The intra predictor 331 may predict a current block by referring to samples in the current picture. The description of the intra predictor 222 may be equally applied to the intra predictor 331. The referenced samples may be located in the neighborhood of the current block or located away therefrom, according to the prediction mode. In intra prediction, the prediction modes may include a plurality of non-directional modes and a plurality of directional modes. The intra predictor 331 may determine a prediction mode applied to the current block by using a prediction mode applied to a neighboring block.

The inter predictor 332 may derive a predicted block for the current block based on a reference block (reference sample array) specified by a motion vector on a reference picture. At this time, in order to reduce the amount of motion information transmitted in the inter prediction mode, the motion information may be predicted on a block, subblock, or sample basis based on the correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block existing in the current picture and a temporal neighboring block existing in the reference picture. For example, the inter predictor 332 may construct a motion information candidate list based on the neighboring blocks, and derive the motion vector and/or the reference picture index of the current block based on the received candidate selection information. Inter prediction may be performed based on various prediction modes (techniques), and the information regarding the prediction may include information indicating the mode (technique) of inter prediction for the current block.

The adder 340 may generate a reconstructed signal (reconstructed picture, reconstructed block, reconstructed sample array) by adding the obtained residual signal to the prediction signal (predicted block, prediction sample array) output from the predictor 330 (including the inter predictor 332 and/or the intra predictor 331). When there is no residual for the processing target block, such as when the skip mode is applied, the predicted block may be used as the reconstructed block. The description of the adder 250 may be equally applied to the adder 340. The adder 340 may be called a reconstructor or a reconstructed block generator. The generated reconstructed signal may be used for intra prediction of the next processing target block within the current picture, and may also be used for inter prediction of the next picture through filtering as described later.

Meanwhile, luma mapping with chroma scaling (LMCS) may be applied in the picture decoding process.

The filter 350 may improve subjective/objective image quality by applying filtering to the reconstructed signal. For example, the filter 350 may generate a modified reconstructed picture by applying various filtering methods to the reconstructed picture, and may store the modified reconstructed picture in the memory 360, specifically, the DPB of the memory 360. The various filtering methods may include, for example, deblocking filtering, a sample adaptive offset, an adaptive loop filter, a bilateral filter, and the like.

The (modified) reconstructed picture stored in the DPB of the memory 360 may be used as a reference picture in the inter predictor 332. The memory 360 may store motion information of a block from which motion information in the current picture is derived (or decoded) and/or motion information of blocks in an already reconstructed picture. The stored motion information may be transmitted to the inter predictor 332 to be utilized as motion information of a spatial neighboring block or motion information of a temporal neighboring block. The memory 360 may store reconstructed samples of reconstructed blocks in the current picture, and may transmit them to the intra predictor 331.

In this specification, the embodiments described in the filter 260, the inter predictor 221, and the intra predictor 222 of the encoding apparatus 200 may be equally or correspondingly applied to the filter 350, the inter predictor 332, and the intra predictor 331 of the decoding apparatus 300, respectively.

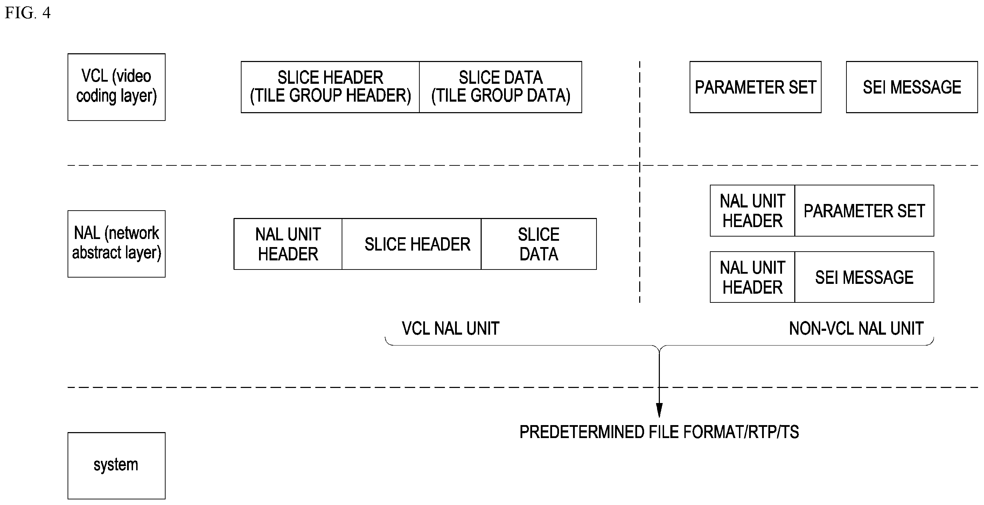

FIG. 4 exemplarily illustrates a hierarchical structure for a coded video/image.

Referring to FIG. 4, the coded image is divided into a VCL (Video Coding Layer) that handles the decoding process of the image and the image itself, a subsystem that transmits and stores the encoded information, and a NAL (Network Abstraction Layer) that exists between the VCL and the subsystem and is responsible for the network adaptation function.

In the VCL, VCL data including compressed image data (slice data) may be generated, or a parameter set including information such as a picture parameter set (PPS), a sequence parameter set (SPS), and a video parameter set (VPS), or an SEI (Supplemental Enhancement Information) message additionally necessary for the decoding process of the image, may be generated.

In the NAL, header information (NAL unit header) may be added to the RBSP (Raw Byte Sequence Payload) generated in the VCL to generate a NAL unit. In this case, RBSP refers to slice data, parameter sets, SEI messages, and the like generated in the VCL. The NAL unit header may include NAL unit type information specified according to the RBSP data included in the corresponding NAL unit.

As illustrated in FIG. 4, the NAL unit may be classified into a VCL NAL unit and a Non-VCL NAL unit according to the RBSP generated in the VCL. The VCL NAL unit may mean a NAL unit including information on the image (slice data), and the Non-VCL NAL unit may mean a NAL unit including information necessary for decoding the image (parameter set or SEI message).

The above-described VCL NAL unit and Non-VCL NAL unit may be transmitted through a network by attaching header information according to the data specification of the subsystem. For example, the NAL unit may be transformed into a data form of a predetermined standard such as an H.266/VVC file format, RTP (Real-time Transport Protocol), or TS (Transport Stream) and transmitted through various networks.

As described above, the NAL unit type may be specified according to the RBSP data structure included in the corresponding NAL unit, and information on the NAL unit type may be stored in the NAL unit header and signaled.

For example, the NAL unit may be largely classified into a VCL NAL unit type and a Non-VCL NAL unit type depending on whether the NAL unit includes information on an image (slice data). The VCL NAL unit type may be classified according to the nature and type of the picture included in the VCL NAL unit, and the Non-VCL NAL unit type may be classified according to the type of the parameter set, etc.

The following is an example of the NAL unit type specified according to the type of the parameter set, etc., included in the Non-VCL NAL unit type.
APS (Adaptation Parameter Set) NAL unit: A type for a NAL unit including an APS
DPS (Decoding Parameter Set) NAL unit: A type for a NAL unit including a DPS
VPS (Video Parameter Set) NAL unit: A type for a NAL unit including a VPS
SPS (Sequence Parameter Set) NAL unit: A type for a NAL unit including an SPS
PPS (Picture Parameter Set) NAL unit: A type for a NAL unit including a PPS

The above-described NAL unit types have syntax information for the NAL unit type, and the syntax information may be stored in the NAL unit header and signaled. For example, the syntax information may be nal_unit_type, and the NAL unit types may be specified by the value of nal_unit_type.

The slice header (slice header syntax, slice header information) may include information/parameters commonly applicable to the slice. The APS (APS syntax) or PPS (PPS syntax) may include information/parameters commonly applicable to one or more slices or pictures. The SPS (SPS syntax) may include information/parameters commonly applicable to one or more sequences. The VPS (VPS syntax) may include information/parameters commonly applicable to multiple layers. The DPS (DPS syntax) may include information/parameters commonly applicable to the entire video. The DPS may include information/parameters related to concatenation of a coded video sequence (CVS). In the present disclosure, high level syntax (HLS) may include at least one of the APS syntax, PPS syntax, SPS syntax, VPS syntax, DPS syntax, or slice header syntax.

In the present disclosure, the image/video information encoded in the encoding apparatus and signaled in the form of a bitstream to the decoding apparatus may include not only intra-picture partitioning-related information, intra/inter prediction information, residual information, in-loop filtering information, and the like, but also information included in the slice header, information included in the APS, information included in the PPS, information included in the SPS, information included in the VPS, and/or information included in the DPS.

Below, the high-level syntax and semantics related to the present invention will be described.

Hereinafter, the SEI message related to the present invention will be described.

### Large supplemental enhancement information (LSEI) message (Large SEI message)

Table 1 shows an example of the large supplemental enhancement information message syntax.

**[Table 1]**

| | |
|---|---|
| lsei_message( ) { | **Descriptor** |
| **lsei_position** | u(2) |
| **lsei_relevance** | u(2) |
| **lsei_reserved** | u(4) |
| **lsei_payload_type_byte** | u(8) |
| **lsei_payload_size_16bits** | u(16) |
| lsei_payload( lseiPayloadType, lseiPayloadSize ) | |
| } | |

Each Large SEI message consists of the variables specifying the type payloadType and size payloadSize of the large SEI message payload. Large SEI message payloads are specified in Annex D. The derived Large SEI message payload size payloadSize is specified in bytes and shall be equal to the number of RBSP bytes in the Large SEI message payload. As a note, the NAL unit byte sequence containing the Large SEI message might include one or more emulation prevention bytes (represented by emulation_prevention_three_byte syntax elements). Since the payload size of a Large SEI message is specified in RBSP bytes, the quantity of emulation prevention bytes is not included in the size payloadSize of a Large SEI payload.

lsei_position indicates if the SEI message corresponds to the PREFIX_SEI_NUT and SUFFIX_SEI_NUT. lsei_position equal 0 indicates that the SEI message is treated as PREFIX_SEI_NUT. lsei_position equal 1 indicates that the SEI message is treated as SUFFIX_SEI_NUT. Values 3 and 4 of Isei_position are reserved for future use and shall be ignored.

lsei_relevance indicates the relevance of the SEI message for the target application. lsei_relevance ranges from 0 to 3, 0 being the least relevant and 3 being the most relevant. As a note, the relevance of an SEI message is an arbitrary decision and its use is to be specified by the target application.

lsei_reserved is reserved for future use and shall be ignored.

lsei_payload_type_byte is a byte of the payload type of a large SEI message. payloadType = lsei_payload_type_byte.

payload_size_16bits is the payload size in bits of a large SEI message. payloadSize = payload_size_16bits.

### General post-processing filtering process using Neural-network post-filter (NNPF) SEI messages

Input to this process is a bitstream BitstreamToFilter. Output of this process is a list of NNPF output pictures ListNnpfOutputPics.

First, BitstreamToFilter is decoded, and the list CroppedDecodedPictures is set to be the list of the cropped decoded pictures in output order resulted from decoding BitstreamToFilter.

Second, the filtering process for one picture, as specified in subclause 2.5.2.1.2, is repeatedly invoked, in output order, for each cropped decoded picture that is in CroppedDecodedPictures and for which one or more NNPFs are activated.

The order of the pictures in ListNnpfOutputPics is in output order.

Within ListNnpfOutputPics there shall be no more than one picture pertaining to any particular output time instance. When for any particular picture in CroppedDecodedPictures there are multiple NNPFs activated and only one the NNPFs is allowed to be chosen to be applied although any of the NNPFs may be chosen, the above constraint shall apply regardless of which NNPF is chosen to be applied to the particular picture.

### Filtering process for one picture using an NNPF

The filtering process specified in this subclause applies to each cropped decoded picture, referred to as the current picture, that is in CroppedDecodedPictures and for which one or more NNPFs are activated.

When applying an NNPF to the current picture, the filtered and/or interpolated pictures are generated by the NNPF by applying the NNPF process specified in the semantics of the NNPFC SEI message, in a patch-wise manner, to the current picture.

When applying an NNPF to the current picture, the order of the pictures generated by the NNPF by applying the NNPF process being stored into the output tensor of the NNPF is in output order.

When the applied NNPF is the last NNPF that is applied to the current picture, the pictures generated by the NNPF and output by the NNPF process are included into ListNnpfOutputPics, in the same order as when the pictures are stored into the output tensor of the NNPF.

### Neural-network post-filter characteristics (NNPFC) SEI message

Table 2 shows an example of the NNPFC SEI message syntax.

**[Table 2]**

| | |
|---|---|
| nn_post_filter_characteristics( payloadSize ) { | **Descriptor** |
| **nnpfc_purpose** | u(16) |
| **nnpfc_id** | ue(v) |
| **nnpfc base flag** | u(1) |
| **nnpfc_mode_idc** | ue(v) |
| if( nnpfc_mode_idc = = 1) { | |
| while( !byte_aligned( ) ) | |
| **nnpfc_reserved_zero_bit_a** | u(1) |
| **nnpfc_tag_uri** | st(v) |
| **nnpfc_uri** | st(v) |
| } | |
| **nnpfc_property_present_flag** | u(1) |
| if( nnpfc_property_present_flag ) { | |
| /* input and output formatting */ | |
| **nnpfc_num_input_pics_minus1** | ue(v) |
| if( nnpfc_num_input_pics_minus1 > 0 ) { | |
| for( i = 0; i <= nnpfc_num_input_pics_minus1; i++ ) | |
| **nnpfc_input_pic_output_flag**[ i ] | u(1) |
| **nnpfc_absent_input_pic_zero_flag** | u(1) |
| } | |
| if( chromaUpsamplingFlag ) | |
| **nnpfc_out_sub_c_flag** | u(1) |
| if( colourizationFlag ) | |
| **nnpfc_out_colour_format_idc** | u(2) |
| if( resolutionResamplingFlag ) { | |
| **nnpfc_pic_width_num_minus1** | ue(v) |
| **nnpfc_pic_width_denom_minus1** | ue(v) |
| **nnpfc_pic_height_num_minus1** | ue(v) |
| **nnpfc_pic_height_denom_minus1** | ue(v) |
| } | |
| if( pictureRateUpsamplingFlag ) | |
| for( i = 0; i < nnpfc_num_input_pics_minus1; i++ ) | |
| **nnpfc_interpolated_pics**[ i ] | ue(v) |
| **nnpfc_component_last_flag** | u(1) |
| **nnpfc_inp_format_idc** | ue(v) |
| **nnpfc_auxiliary_inp_idc** | ue(v) |
| **nnpfc_inp_order_idc** | ue(v) |
| if( nnpfc_inp_format_idc = = 1 ) { | |
| if( nnpfc_inp_order_idc != 1 ) | |
| **nnpfc_inp_tensor_luma_bitdepth_minus8** | ue(v) |
| if( nnpfc_inp_order_idc != 0 ) | |
| **nnpfc_inp_tensor_chmma_bitdepth_minus8** | ue(v) |
| } | |
| **nnpfc_out_format_idc** | ue(v) |
| **nnpfc_out_order_idc** | ue(v) |
| if( nnpfc_out_format_idc = = 1) { | |
| if( nnpfc_out_order_idc != 1 ) | |
| **nnpfc_out_tensor_luma_bitdepth_minus8** | ue(v) |
| if( nnpfc_out_order_idc != 0 ) | |
| **nnpfc_out_tensor_chroma_bitdepth_minus8** | ue(v) |
| } | |
| **nnpfc_separate_colour_description_present_flag** | u(1) |
| if( nnpfc_separate_colour_description_present_flag ) { | |
| **nnpfc_colour_primaries** | u(8) |
| **nnpfc transfer characteristics** | u(8) |
| if( nnpfc_out_format_idc = = 1 ) { | |
| **nnpfc_matrix_coeffs** | u(8) |
| **nnpfc_full_range_flag** | u(1) |
| } | |
| } | |
| **nnpfc_chroma_loc_info_present flag** | u(1) |
| if( nnpfc_chroma_loc_info_present_flag ) | |
| **nnpfc_chroma_sample_loc_type_frame** | ue(v) |
| **nnpfc_overlap** | ue(v) |
| **nnpfc_constant_patch_size flag** | u(1) |
| if( nnpfc_constant_patch_size_flag ) { | |
| **nnpfc_patch_width_minus1** | ue(v) |

| | |
|---|---|
| **nnpfc_patch_height_minus1** | ue(v) |
| } else { | |
| **nnpfc_extended_patch_width_cd_delta_minus1** | ue(v) |
| **nnpfc_extended_patch_height_cd_delta_minus1** | ue(v) |
| } | |
| **nnpfc_padding_type** | ue(v) |
| if( nnpfc_padding_type == 4 ) { | |
| if( nnpfc_inp_order_idc != 1) | |
| **nnpfc_luma_padding_val** | ue(v) |
| if( nnpfc_inp_order_idc != 0 ) { | |
| **nnpfc_cb_padding_val** | ue(v) |
| **nnpfc_cr_padding_val** | ue(v) |
| } | |
| } | |
| **nnpfc_complexity_info_present_flag** | u(1) |
| if( nnpfc_complexity_info_present_flag ) { | |
| **nnpfc_parameter_type_idc** | u(2) |
| if( nnpfc_parameter_type_idc != 2 ) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| **nnpfc_metadata_extension_num_bits** | ue(v) |
| if( nnpfc_metadata_extension_num_bits > 0 ) | |
| **nnpfc reserved metadata extension** | u(v) |
| } | |
| /* ISO/IEC 15938-17 bitstream */ | |
| if( nnpfc_mode_idc = = 0 ) { | |
| while( !byte_aligned( ) ) | |
| **nnpfc_reserved_zero_bit_b** | u(1) |
| for( i = 0; more_data_in_payload( ); i++ ) | |
| **nnpfc_payload_byte**[ i ] | b(8) |
| } | |
| } | |

The neural-network post-filter characteristics (NNPFC) SEI message specifies a neural network that may be used as a post-processing filter. The use of specified neural-network post-processing filters (NNPFs) for specific pictures is indicated with neural-network post-filter activation (NNPFA) SEI messages.

Use of this SEI message requires the definition of the following variables:
- Input picture width and height in units of luma samples, denoted herein by CroppedWidth and CroppedHeight, respectively.
- Luma sample array CroppedYPic[ idx ] and chroma sample arrays CroppedCbPic[ idx ] and CroppedCrPic[ idx ], when present, of the input pictures with index idx in the range of 0 to numInputPics - 1, inclusive, that are used as input for the NNPF.
- Bit depth BitDepthY for the luma sample array of the input pictures.
- Bit depth BitDepthC for the chroma sample arrays, if any, of the input pictures.
- A chroma format indicator, denoted herein by ChromaFormatIdc
- When nnpfc_auxiliary_inp_idc is equal to 1, a filtering strength control value array StrengthControlVal[ idx ] that shall contain real numbers in the range of 0 to 1, inclusive, of the input pictures with index idx in the range of 0 to numInputPics - 1, inclusive.

Input picture with index 0 corresponds to the picture for which the NNPF defined by this NNPFC SEI message is activated by an NNPFA SEI message. Input picture with index i in the range of 1 to numInputPics - 1, inclusive, precedes the input picture with index i - 1 in output order.

The variables SubWidthC and SubHeightC are derived from ChromaFormatIdc.

As a note, more than one NNPFC SEI message can be present for the same picture. When more than one NNPFC SEI message with different values of nnpfc_id is present or activated for the same picture, they can have the same or different values of nnpfc_purpose and nnpfc_mode_idc.

nnpfc_purpose indicates the purpose of the NNPF as specified in Table 3,

**[Table 3]**

| **bitMask** | **Interpretation** |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |

Here, ( nnpfc_purpose & bitMask ) not equal to 0 indicates that the NNPF has the purpose associated with the bitMask value in Table 3. When nnpfc_purpose is greater than 0 and ( nnpfc_purpose & bitMask ) is equal to 0, the purpose associated with the bitMask value is not applicable to the NNPF. When nnpfc_pupose is equal to 0, the NNPF may be used as determined by the application.

The value of nnpfc_purpose shall be in the range of 0 to 63, inclusive, in bitstreams conforming to this document. Values of 64 to 65 535, inclusive, for nnpfc_purpose are reserved for future use by ITU-T | ISO/IEC and shall not be present in bitstreams conforming to this edition of this document. Decoders conforming to this edition of this document shall ignore NNPFC SEI messages with nnpfc_purpose in the range of 64 to 65 535, inclusive.

The variables chromaUpsamplingFlag, resolutionResamplingFlag, pictureRateUpsamplingFlag, bitDepthUpsamplingFlag, and colourizationFlag, specifying whether nnpfc_purpose indicates the purpose of the NNPF to include chroma upsampling, resolution resampling, picture rate upsampling, bit depth upsampling, and colourization, respectively, are derived as Table 4.

**[Table 4]**

| |
|---|
| ``` chromaUpsamplingFlag = ( ( nnpfc_purpose & 0x02 ) > 0 ) ? 1 : 0 resolutionResamplingFlag = ( ( nnpfc_purpose & 0x04 ) > 0 ) ? 1 : 0 pictureRateUpsamplingFlag = ( ( nnpfc_purpose & 0x08 ) > 0 ) ? 1 : 0 bitDepthUpsamplingFlag = ( ( nnpfc_purpose & 0x10 ) > 0 ) ? 1 : 0 colourizationFlag = ( ( nnpfc_purpose & 0x20 ) > 0 ) ? 1 : 0 ``` |

As a note, when a reserved value of nnpfc_purpose is taken into use in the future by ITU-T | ISO/IEC, the syntax of this SEI message could be extended with syntax elements whose presence is conditioned by nnpfc_purpose being equal to that value.

When ChromaFormatIdc is equal to 3, chromaUpsamplingFlag shall be equal to 0.

When ChromaFormatIdc or chromaUpsamplingFlag is not equal to 0, colourizationFlag shall be equal to 0.

When pictureRateUpsamplingFlag is equal to 1 and the input picture with index 0 is associated with a frame packing arrangement SEI message with fp_arrangement_type equal to 5, all input pictures are associated with a frame packing arrangement SEI message with fp_arrangement_type equal to 5 and the same value of fp_current_frame_is_frame0_flag.

nnpfc_id contains an identifying number that may be used to identify an NNPF. The value of nnpfc_id shall be in the range of 0 to 2³² - 2, inclusive. Values of nnpfc_id from 256 to 511, inclusive, and from 2³¹ to 2³² - 2, inclusive, are reserved for future use by ITU-T | ISO/IEC. Decoders conforming to this document encountering an NNPFC SEI message with nnpfc_id in the range of 256 to 511, inclusive, or in the range of 2³¹ to 2³² - 2, inclusive, shall ignore the SEI message.

When an NNPFC SEI message is the first NNPFC SEI message, in decoding order, that has a particular nnpfc_id value within the current CLVS, the following applies:
- This SEI message specifies a base NNPF.
- This SEI message pertains to the current decoded picture and all subsequent decoded pictures of the current layer, in output order, until the end of the current CLVS.

nnpfc_base_flag equal to 1 specifies that the SEI message specifies the base NNPF. nnpfc_base_flag equal to 0 specifies that the SEI message specifies an update relative to the base NNPF.

The following constraints apply to the value of nnpfc_base_flag:
- When an NNPFC SEI message is the first NNPFC SEI message, in decoding order, that has a particular nnpfc_id value within the current CLVS, the value of nnpfc_base_flag shall be equal to 1.
- When an NNPFC SEI message nnpfcB is not the first NNPFC SEI message, in decoding order, that has a particular nnpfc_id value within the current CLVS and the value of nnpfc_base_flag is equal to 1, the NNPFC SEI message shall be a repetition of the first NNPFC SEI message nnpfcA with the same nnpfc_id value, in decoding order, i.e., the payload content of nnpfcB shall be the same as that of nnpfcA.

When nnpfc_base_flag is equal to 0, the following applies:
- This SEI message defines an update relative to the preceding base NNPF in decoding order with the same nnpfc_id value. Updates are not cumulative but rather each update is applied on the base NNPF, which is the NNPF specified by the first NNPFC SEI message, in decoding order, that has a particular nnpfc_id value within the current CLVS. The NNPF defined by this SEI message is obtained by applying the update defined by this SEI message relative to the base NNPF with the same nnpfc_id value.
- This SEI message pertains to the current decoded picture and all subsequent decoded pictures of the current layer, in output order, until the end of the current CLVS or up to but excluding the decoded picture that follows the current decoded picture in output order within the current CLVS and is associated with a subsequent NNPFC SEI message, in decoding order, having nnpfc_base_flag equal to 0 and that particular nnpfc_id value within the current CLVS, whichever is earlier.

nnpfc_mode_idc equal to 0 indicates that this SEI message contains an ISO/IEC 15938-17 bitstream that specifies a base NNPF (when nnpfc_base_flag is equal to 1) or is an update relative to the base NNPF with the same nnpfc_id value (when nnpfc_base_flag is equal to 0).

When nnpfc_base_flag is equal to 1, nnpfc_mode_idc equal to 1 specifies that the base NNPF associated with the nnpfc_id value is a neural network identified by the URI indicated by nnpfc_uri with the format identified by the tag URI nnpfc_tag_uri.

When nnpfc_base_flag is equal to 0, nnpfc_mode_idc equal to 1 specifies that an update relative to the base NNPF with the same nnpfc_id value is defined by the URI indicated by nnpfc_uri with the format identified by the tag URI nnpfc _tag_uri.

The value of nnpfc_mode_idc shall be in the range of 0 to 1, inclusive, in bitstreams conforming to this edition of this document. Values of 2 to 255, inclusive, for nnpfc_mode_idc are reserved for future use by ITU-T | ISO/IEC and shall not be present in bitstreams conforming to this edition of this document. Decoders conforming to this edition of this document shall ignore NNPFC SEI messages with nnpfc_mode_idc in the range of 2 to 255, inclusive. Values of nnpfc_mode_idc greater than 255 shall not be present in bitstreams conforming to this edition of this document and are not reserved for future use.

nnpfc _reserved _zero_bit_a shall be equal to 0 in bitstreams conforming to this edition of this document. Decoders shall ignore NNPFC SEI messages in which nnpfc _reserved _zero_bit_a is not equal to 0.

nnpfc_tag_uri contains a tag URI with syntax and semantics as specified in IETF RFC 4151 identifying the format and associated information about the neural network used as a base NNPF or an update relative to the base NNPF with the same nnpfc_id value specified by nnpfc_uri.

As a note, nnpfc_tag_uri enables uniquely identifying the format of neural network data specified by nnrpf_uri without needing a central registration authority.

nnpfc_tag_uri equal to "tag:iso.org,2023:15938-17" indicates that the neural network data identified by nnpfc_uri conforms to ISO/IEC 15938-17.

nnpfc_uri contains a URI with syntax and semantics as specified in IETF Internet Standard 66 identifying the neural network used as a base NNPF or an update relative to the base NNPF with the same nnpfc_id value.

nnpfc_property_present_flag equal to 1 specifies that syntax elements related to the filter purpose, input formatting, output formatting, and complexity are present. nnpfc_property_present_flag equal to 0 specifies that no syntax elements related to the filter purpose, input formatting, output formatting, and complexity are present.

When nnpfc_base_flag is equal to 1, nnpfc_property_present_flag shall be equal to 1.

When nnpfc_property_present_flag is equal to 0, the values of all syntax elements that may be present only when nnpfc_property_present_flag is equal to 1 are inferred to be equal to their corresponding syntax elements, respectively, in the NNPFC SEI message that contains the base NNPF for which this SEI message provides an update.

When an NNPFC SEI message nnpfcCurr is not the first NNPFC SEI message, in decoding order, that has a particular nnpfc_id value within the current CLVS, is not a repetition of the first NNPFC SEI message with that particular nnpfc_id (i.e., the value of nnpfc_base_flag is equal to 0), and the value of nnpfc_property_present_flag is equal to 1, the following constraints apply:
- The value of nnpfc_purpose in the NNPFC SEI message shall be the same as the value of nnpfc_purpose in the first NNPFC SEI message, in decoding order, that has that particular nnpfc_id value within the current CLVS.
- The values of syntax elements following nnpfc_property_present_flag and preceding nnpfc_complexity_info_present_flag, in decoding order, in the NNPFC SEI message shall be the same as the values of corresponding syntax elements in the first NNPFC SEI message, in decoding order, that has that particular nnpfc_id value within the current CLVS.
- Either nnpfc_complexity_info_present_flag shall be equal to 0 or both nnpfc_complexity_info_present_flag shall be equal to 1 in the first NNPFC SEI message, in decoding order, that has that particular nnpfc_id value within the current CLVS (denoted as nnpfcBase below) and all the following apply:
- nnpfc_parameter_type_idc in nnpfcCurr shall be equal to nnpfc_parameter_type_idc in nnpfcBase.
- nnpfc _log2_parameter_bit_length_minus3 in nnpfcCurr, when present, shall be less than or equal to nnpfc_log2_parameter_bit_length_minus3 in nnpfcBase.
- If nnpfc_num_parameters_idc in nnpfcBase is equal to 0, nnpfc_num_parameters_idc in nnpfcCurr shall be equal to 0.
- Otherwise (nnpfc_num_parameters_idc in nnpfcBase is greater than 0), nnpfc_num_parameters_idc in nnpfcCurr shall be greater than 0 and less than or equal to nnpfc_num_parameters_idc in nnpfcBase.
- If nnpfc_num_kmac_operations_idc in nnpfcBase is equal to 0, nnpfc num kmac_operations_idc in nnpfcCurr shall be equal to 0.
- Otherwise (nnpfc num_kmac_operations_idc in nnpfcBase is greater than 0), nnpfc_num_kmac_operations_idc in nnpfcCurr shall be greater than 0 and less than or equal to nnpfc_num_kmac_operations_idc in nnpfcBase.
- If nnpfc_total_kilobyte_size in nnpfcBase is equal to 0, nnpfc_total_kilobyte_size in nnpfcCurr shall be equal to 0.
- Otherwise (nnpfc_total_kilobyte_size in nnpfcBase is greater than 0), nnpfc_total_kilobyte_size in nnpfcCurr shall be greater than 0 and less than or equal to nnpfc_total_kilobyte_size in nnpfcBase.

nnpfc_num_input_pics_minus1 plus 1 specifies the number of pictures used as input for the NNPF. The value of nnpfc num_input_pics_minus1 shall be in the range of 0 to 63, inclusive. When pictureRateUpsamplingFlag is equal to 1, the value of nnpfc_num_input_pics_minus1 shall be greater than 0.

The variable numInputPics, specifying the number of pictures used as input for the NNPF, is derived as Table 5.

**[Table 5]**

| |
|---|
| ``` numlnputPics = nnpfc_num_input_pics_minus1 + 1 ``` |

nnpfc_input_pic_output_flag[ i ] equal to 1 indicates that for the i-th input picture the NNPF generates a corresponding output picture. nnpfc _input_pic_output_flag[ i ] equal to 0 indicates that for the i-th input picture the NNPF does not generate a corresponding output picture. When nnpfc num_input_pics_minus1 is equal to 0, nnpfc _input_pic_output_flag 0 ] is inferred to be equal to 1. When pictureRateUpsamplingFlag is equal to 0 and nnpfc num_input_pics_minus1 is greater than 0, nnpfc _input_pic_output_flag[ i ] shall be equal to 1 for at least one value of i in the range of 0 to nnpfc_num_input_pics_minus 1, inclusive.

nnpfc_absent_input_pic _zero_flag equal to 1 indicates that the NNPF expects an input picture that is not present in the bitstream to be represented by sample arrays with sample values equal to 0. nnpfc_absent_input_pic _flag equal to 0 indicates that the NNPF expects an input picture that is not present in the bitstream to be represented by the closest input picture in output order within the bitstream.

nnpfc_out_sub_c_flag specifies the values of the variables outSubWidthC and outSubHeightC when chromaUpsamplingFlag is equal to 1. nnpfc_out_sub_c_flag equal to 1 specifies that outSubWidthC is equal to 1 and outSubHeightC is equal to 1. nnpfc_out_sub_c_flag equal to 0 specifies that outSubWidthC is equal to 2 and outSubHeightC is equal to 1. When ChromaFormatIdc is equal to 2 and nnpfc_out_sub_c_flag is present, the value of nnpfc_out_sub_c_flag shall be equal to 1.

nnpfc_out_colour format idc, when colourizationFlag is equal to 1, specifies the colour format of the NNPF output and consequently the values of the variables outSubWidthC and outSubHeightC. nnpfc_out_colour_format_idc equal to 1 specifies that the colour format of the NNPF output is the 4:2:0 format and outSubWidthC and outSubHeightC are both equal to 2. nnpfc_out_colour format_idc equal to 2 specifies that the colour format of the NNPF output is the 4:2:2 format and outSubWidthC is equal to 2 and outSubHeightC is equal to 1. nnpfc_out_colour_format_idc equal to 3 specifies that the colour format of the NNPF output is the 4:4:4 format and outSubWidthC and outSubHeightC are both equal to 1. The value of nnpfc_out_colour_format_idc shall not be equal to 0.

When chromaUpsamplingFlag and colourizationFlag are both equal to 0, outSubWidthC and outSubHeightC are inferred to be equal to SubWidthC and SubHeightC, respectively.

nnpfc_pic_width_num _minus 1 plus 1 and nnpfc_pic_width_denom_minus 1 plus 1 specify the numerator and denominator, respectively, for the resampling ratio of the NNPF output picture width relative to CroppedWidth. The value of ( nnpfc_pic_width_num_minus 1 + 1 ) ÷ ( nnpfc_pic_width_denom_minus 1 + 1 ) shall be in the range of 1 ÷ 16 to 16, inclusive. When nnpfc_pic_width_num _minus 1 and nnpfc_pic_width_denom_minus 1 are not present, the values of nnpfc_pic_width_num_num_minus1 and nnpfc_pic_width_denom_minus1 are both inferred to be equal to 0.

The variable nnpfcOutputPicWidth, representing the width of the luma sample arrays of the picture(s) resulting from applying the NNPF identified by nnpfc_id to the input picture(s), is derived as Table 6.

**[Table 6]**

| |
|---|
| ``` nnpfcOutputPicWidth = Ceil( CroppedWidth * ( nnpfc_pic_width_num_minus1 + 1 ) ÷ ( nnpfc_pic_width_denom_minus1 + 1 ) ) ``` |

It is a requirement of bitstream conformance that the value of nnpfcOutputPicWidth % outSubWidthC shall be equal to 0.

nnpfc_pic_height_num minus 1 plus 1 and nnpfc_pic_height_denom_minus 1 plus 1 specify the numerator and denominator, respectively, for the resampling ratio of the NNPF output picture height relative to CroppedHeight. The value of ( nnpfc_pic_height_num_num_minus 1 + 1 ) ÷ ( nnpfc_pic_height_denom_minus 1 + 1 ) shall be in the range of 1 ÷ 16 to 16, inclusive. When nnpfc_pic_height_num minus 1 and nnpfc_pic_height_denom_minus1 are not present, the values of nnpfc_pic_height_num minus 1 and nnpfc_pic_height_denom_minus 1 are both inferred to be equal to 0.

The variable nnpfcOutputPicHeight, representing the height of the luma sample arrays of the picture(s) resulting from applying the NNPF identified by nnpfc_id to the input picture(s), is derived as Table 7.

**[Table 7]**

| |
|---|
| ``` nnpfcOutputPicHeight = Ceil( CroppedHeight * ( nnpfc_pic_height_num_minus1 + 1 ) ÷ ( nnpfc_pic_height_denom_minus1 + 1 ) ) ``` |

It is a requirement of bitstream conformance that the value of nnpfcOutputPicHeight % outSubHeightC shall be equal to 0.

When nnpfc_pic_width_num_num_minus1, nnpfc_pic_width_denom_minus1, nnpfc_pic_height_num minus1, and nnpfc_pic_height_denom _minus 1 are present, at least one the following shall be true:
- The value of nnpfcOutputPicWidth is not equal to CroppedWidth.
- The value of nnpfcOutputPicHeight is not equal to CroppedHeight.

nnpfc_interpolated_pics[ i ] specifies the number of interpolated pictures generated by the NNPF between the i-th and the ( i + 1 )-th picture used as input for the NNPF. The value of nnpfc_interpolated_pics[ i ] shall be in the range of 0 to 63, inclusive. The value of nnpfc_interpolated_pics[ i ] shall be greater than 0 for at least one value of i in the range of 0 to nnpfc num_input_pics_minus1 - 1, inclusive.

The variables NumInpPicsInOutputTensor, specifying the number of pictures that have a corresponding input picture and are present in the output tensor of the NNPF, InpIdx[ idx ] specifying the input picture index of the idx-th picture that is present in the output tensor of the NNPF and has a corresponding input picture, and numOutputPics, specifying the total number of pictures present in the output tensor of the NNPF, are derived as Table 8.

**[Table 8]**

| |
|---|
| ``` for( i = 0, numOutputPics = 0; i < numInputPics; i++ ) if( nnpfc_input_pic_output_flag[ i ] ) { InpIdx[ numOutputPics ] = i numOutputPics++ } NumlnpPicsInOutputTensor = numOutputPics if( pictureRateUpsamplingFlag ) for( i = 0; i <= numInputPics - 2; i++ ) numOutputPics += nnpfc_interpolated_pics[ i ] ``` |

nnpfc_component_last_flag equal to 1 indicates that the last dimension in the input tensor inputTensor to the NNPF and the output tensor outputTensor resulting from the NNPF is used for a current channel. nnpfc_component_last_flag equal to 0 indicates that the third dimension in the input tensor inputTensor to the NNPF and the output tensor outputTensor resulting from the NNPF is used for a current channel.

As a note, the first dimension in the input tensor and in the output tensor is used for the batch index, which is a practice in some neural network frameworks. While formulae in the semantics of this SEI message use the batch size corresponding to the batch index equal to 0, it is up to the post-processing implementation to determine the batch size used as input to the neural network inference.

As a note, for example, when nnpfc_inp_order_idc is equal to 3 and nnpfc_auxiliary_inp_idc is equal to 1, there are 7 channels in the input tensor, including four luma matrices, two chroma matrices, and one auxiliary input matrix. In this case, the process DeriveInputTensors( ) would derive each of these 7 channels of the input tensor one by one, and when a particular channel of these channels is processed, that channel is referred to as the current channel during the process.

nnpfc_inp_format_idc indicates the method of converting a sample value of the input picture to an input value to the NNPF. When nnpfc_inp_format_ide is equal to 0, the input values to the NNPF are real numbers and the functions InpY( ) and InpC( ) are specified as Table 9.

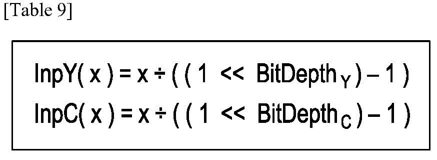

When nnpfc_inp_format_idc is equal to 1, the input values to the NNPF are unsigned integer numbers and the functions InpY( ) and InpC( ) are specified as Tables 10 and 11.

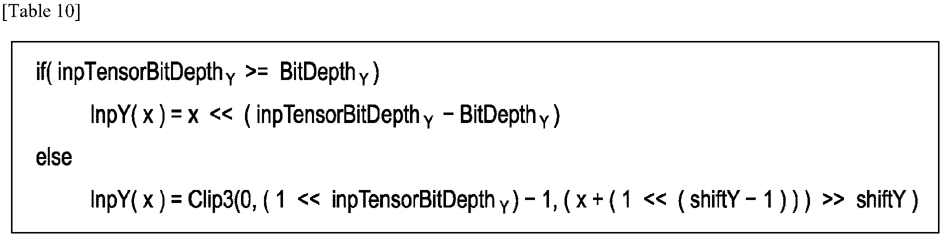

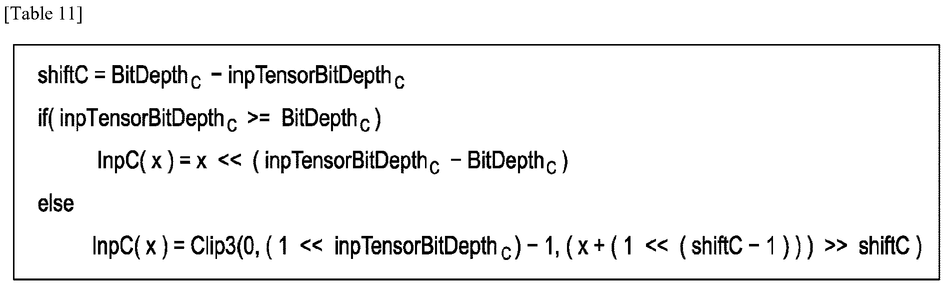

The variable inpTensorBitDepthY is derived from the syntax element nnpfc_inp_tensor_luma_bitdepth_minus8 as specified below. The variable inpTensorBitDepthC is derived from the syntax element nnpfc_inp_tensor_chroma_bitdepth_minus8 as specified below.

Values of nnpfc_inp_format_idc greater than 1 are reserved for future specification by ITU-T | ISO/IEC and shall not be present in bitstreams conforming to this edition of this document. Decoders conforming to this edition of this document shall ignore NNPFC SEI messages that contain reserved values of nnpfc_inp_format_idc.

nnpfc_auxiliary_inp_idc greater than 0 indicates that auxiliary input data is present in the input tensor of the NNPF. nnpfc_auxiliary_inp_idc equal to 0 indicates that auxiliary input data is not present in the input tensor. nnpfc_auxiliary_inp_idc equal to 1 specifies that auxiliary input data is derived as specified in Table 12.

The value of nnpfc_auxiliary_inp_idc shall be in the range of 0 to 1, inclusive, in bitstreams conforming to this edition of this document.

Values of 2 to 255, inclusive, for nnpfc_auxiliary_inp_idc are reserved for future use by ITU-T | ISO/IEC and shall not be present in bitstreams conforming to this edition of this document. Decoders conforming to this edition of this document shall ignore NNPFC SEI messages with nnpfc_auxiliary_inp_idc in the range of 2 to 255, inclusive. Values of nnpfc_auxiliary_inp_idc greater than 255 shall not be present in bitstreams conforming to this edition of this document and are not reserved for future use.

nnpfc_inp_order_idc indicates the method of ordering the sample arrays of an input picture to form an input tensor to the NNPF.

The value of nnpfc_inp_order_idc shall be in the range of 0 to 3, inclusive, in bitstreams conforming to this edition of this document. Values of 4 to 255, inclusive, for nnpfc_inp_order_idc are reserved for future use by ITU-T | ISO/IEC and shall not be present in bitstreams conforming to this edition of this document. Decoders conforming to this edition of this document shall ignore NNPFC SEI messages with nnpfc_inp_order_idc in the range of 4 to 255, inclusive. Values of nnpfc_inp_order_idc greater than 255 shall not be present in bitstreams conforming to this edition of this document and are not reserved for future use.

When ChromaFormatIdc is not equal to 1, nnpfc_inp_order_idc shall not be equal to 3.

When ChromaFormatIdc is equal to 0, nnpfc_inp_order_idc shall be equal to 0.

When chromaUpsamplingFlag is equal to 1, nnpfc_inp_order_idc shall not be equal to 0.

Table 12 contains an informative description of nnpfc_inp_order_idc values.

**[Table 12]**

| **nnpfc_inp_ order_idc** | **Description** |
|---|---|
| 0 | If nnpfc_auxiliary_inp_idc is equal to 0, one luma matrix is present in the input tensor for each input picture, and the number of channels is 1. Otherwise, when nnpfc_auxiliary_inp_idc is equal to 1, one luma matrix and one auxiliary input matrix are present, and the number of channels is 2. |
| 1 | If nnpfc_auxiliary_inp_idc is equal to 0, two chroma matrices are present in the input tensor, and the number of channels is 2. Otherwise, when nnpfc_auxiliary_inp_idc is equal to 1, two chroma matrices and one auxiliary input matrix are present, and the number of channels is 3. |
| 2 | If nnpfc_auxiliary_inp_idc is equal to 0, one luma and two chroma matrices are present in the input tensor, and the number of channels is 3. Otherwise, when nnpfc_auxiliary_inp_idc is equal to 1, one luma matrix, two chroma matrices and one auxiliary input matrix are present, and the number of channels is 4. |
| 3 | If nnpfc_auxiliary_inp_idc is equal to 0, four luma matrices and two chroma matrices are present in the input tensor, and the number of channels is 6. Otherwise, when nnpfc_auxiliary_inp_idc is equal to 1, four luma matrices, two chroma matrices, and one auxiliary input matrix are present in the input tensor, and the number of channels is 7. The luma channels are derived in an interleaved manner as illustrated in Figure 12. This nnpfc_inp_order_idc can only be used when the input chroma format is 4:2:0. |
| 4..255 | Reserved |

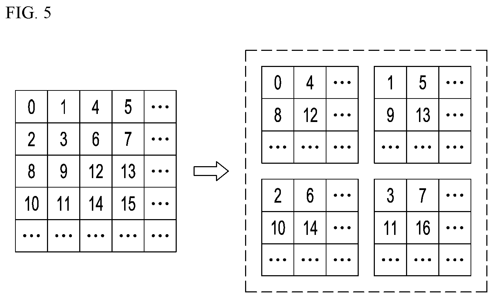

FIG. 5, which is referenced in Table 12, is a diagram illustrating an interleaved method for deriving the luma channel.

nnpfc_inp_tensor_luma_bitdepth_minus8 plus 8 specifies the bit depth of luma sample values in the input integer tensor. The value of inpTensorBitDepthY is derived as Table 13.

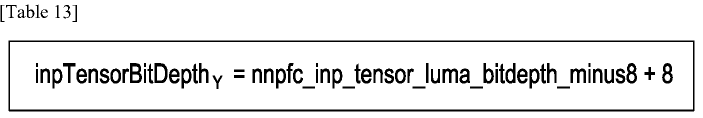

It is a requirement of bitstream conformance that the value of nnpfc_inp_tensor_luma_bitdepth_minus8 shall be in the range of 0 to 24, inclusive.

nnpfc_inp_tensor_chroma_bitdepth_minus8 plus 8 specifies the bit depth of chroma sample values in the input integer tensor. The value of inpTensorBitDepthC is derived as Table 14.

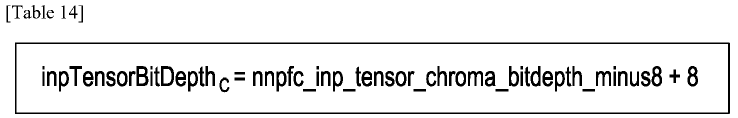

It is a requirement of bitstream conformance that the value of nnpfc _inp_tensor_chroma_bitdepth_minus8 shall be in the range of 0 to 24, inclusive.

When nnpfc_auxiliary_inp_idc is equal to 1, the variable strengthControlScaledVal is derived as Table 15.

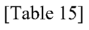

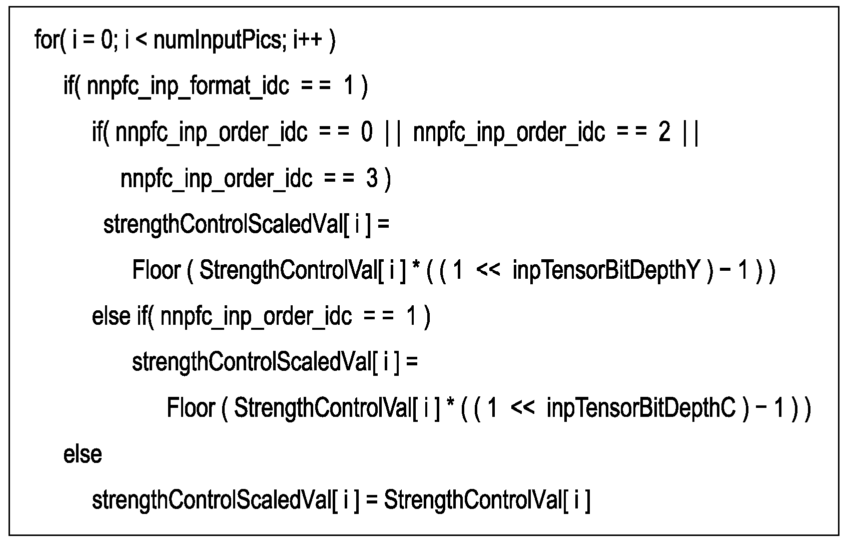

A patch is a rectangular array of samples from a component (e.g., a luma or chroma component) of a picture.

The process DeriveInputTensors( ), for deriving the input tensor inputTensor for a given vertical sample coordinate cTop and a horizontal sample coordinate cLeft specifying the top-left sample location for the patch of samples included in the input tensor, is specified as Table 16.

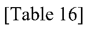

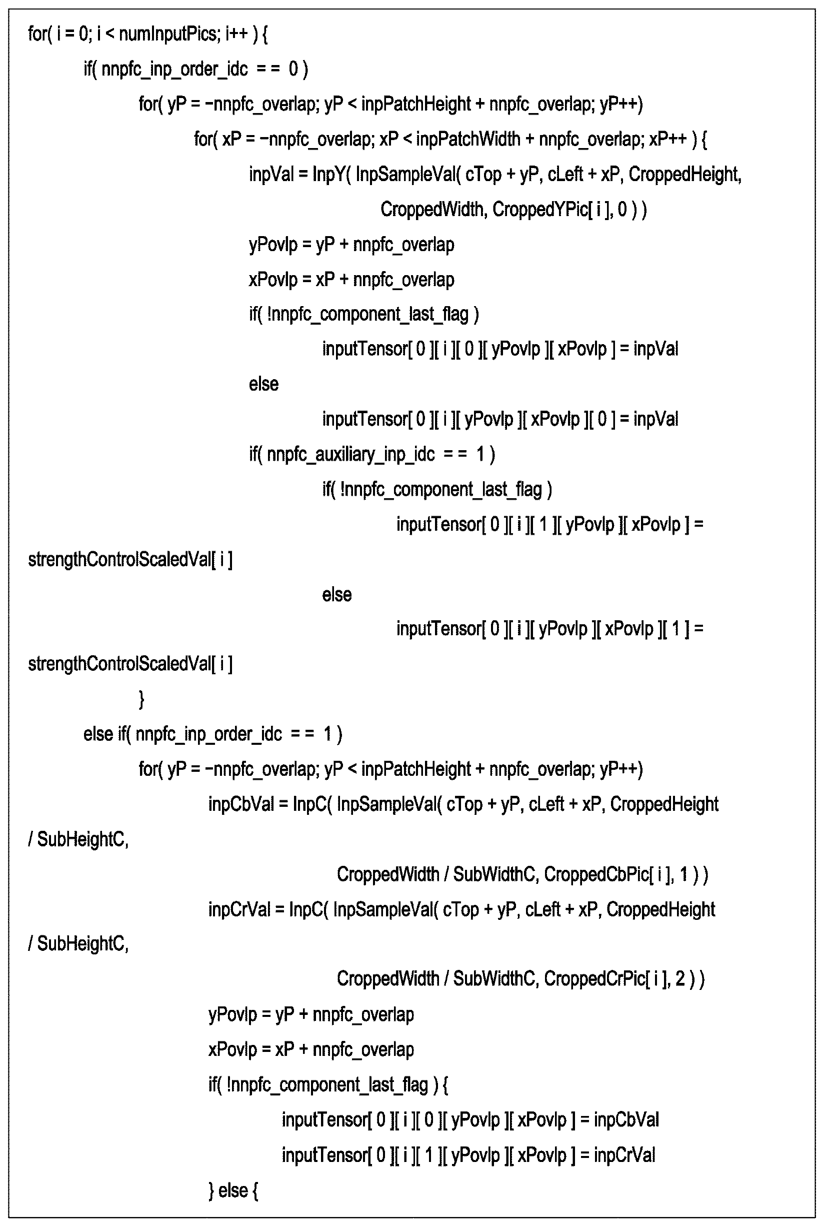

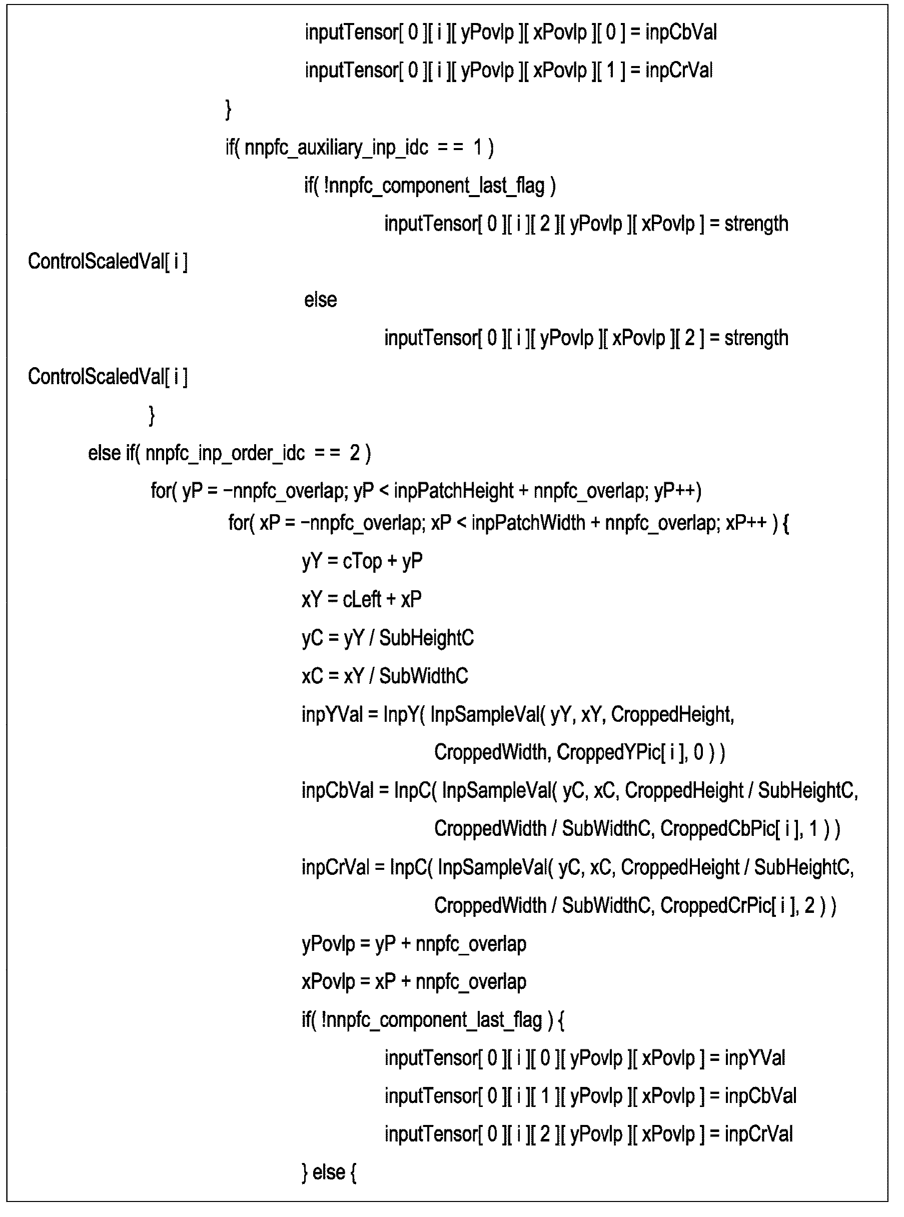

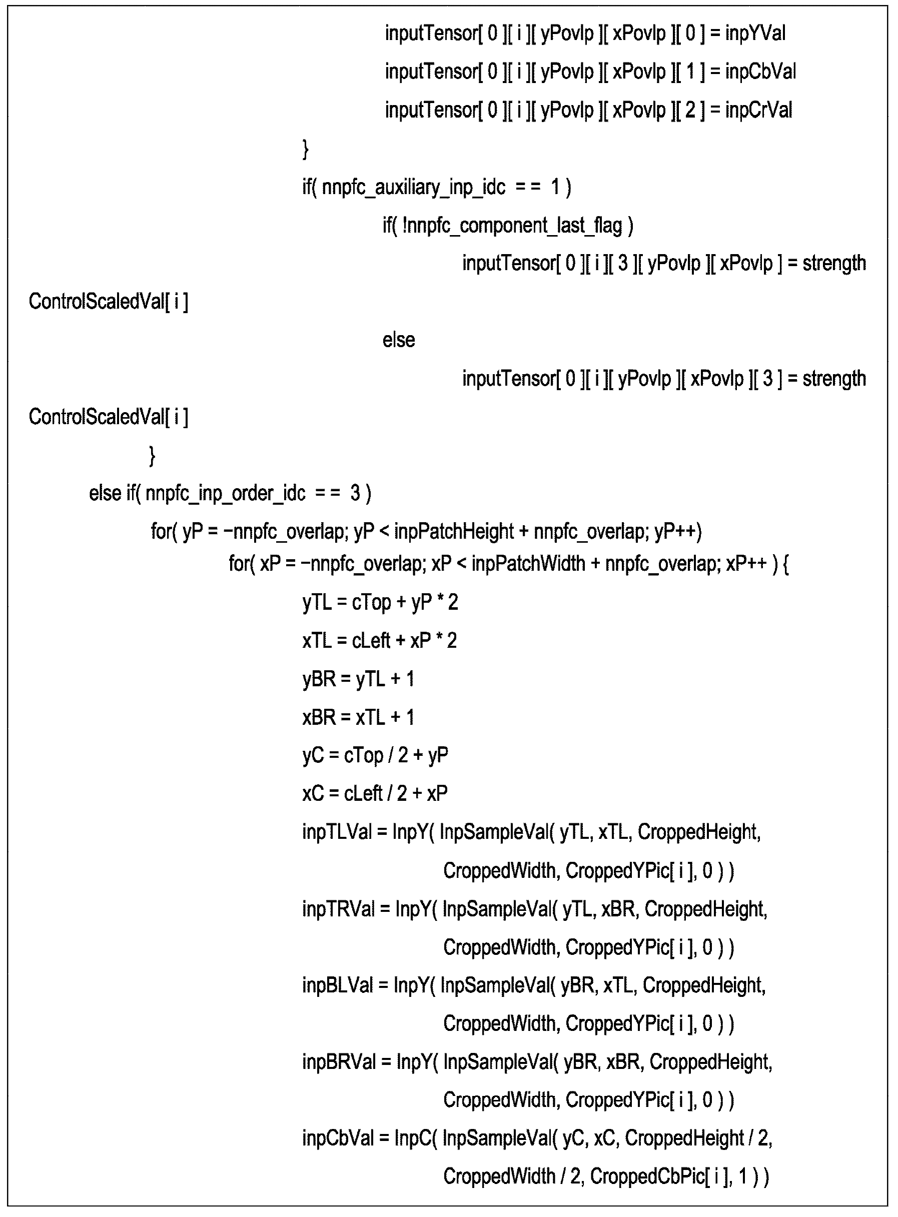

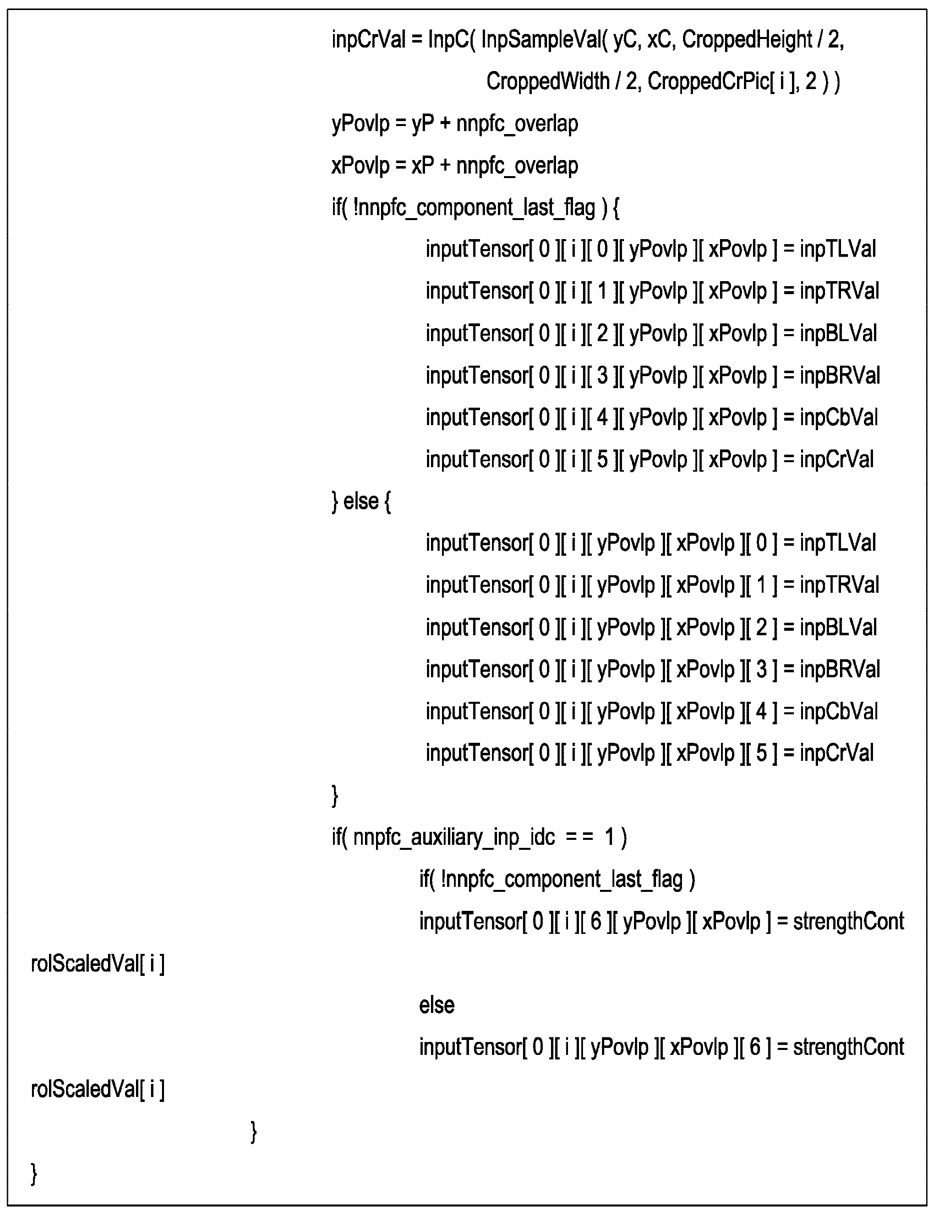

nnpfc_out format_idc equal to 0 indicates that the sample values output by the NNPF are real numbers where the value range of 0 to 1, inclusive, maps linearly to the unsigned integer value range of 0 to ( 1 << bitDepth ) - 1, inclusive, for any desired bit depth bitDepth for subsequent post-processing or displaying.

nnpfc_out format_idc equal to 1 indicates that the luma sample values output by the NNPF are unsigned integer numbers in the range of 0 to ( 1 < < outTensorBitDepthY ) - 1, inclusive, and the chroma sample values output by the NNPF are unsigned integer numbers in the range of 0 to ( 1 << outTensorBitDepthC ) - 1, inclusive.

Values of nnpfc_out_format_idc greater than 1 are reserved for future specification by ITU-T | ISO/IEC and shall not be present in bitstreams conforming to this edition of this document. Decoders conforming to this edition of this document shall ignore NNPFC SEI messages that contain reserved values of nnpfc_out_format_idc.

nnpfc_out_order_idc indicates the output order of samples resulting from the NNPF.

The value of nnpfc_out_order_idc shall be in the range of 0 to 3, inclusive, in bitstreams conforming to this edition of this document. Values of 4 to 255, inclusive, for nnpfc_out_order_idc are reserved for future use by ITU-T | ISO/IEC and shall not be present in bitstreams conforming to this edition of this document. Decoders conforming to this edition of this document shall ignore NNPFC SEI messages with nnpfc_out_order_idc in the range of 4 to 255, inclusive. Values of nnpfc_out_order_idc greater than 255 shall not be present in bitstreams conforming to this edition of this document and are not reserved for future use.

When chromaUpsamplingFlag is equal to 1, nnpfc_out_order_idc shall not be equal to 0 or 3.

When colourizationFlag is equal to 1, nnpfc_out_order_idc shall not be equal to 0.

Table 17 contains an informative description of nnpfc_out_order_idc values.

**[Table 17]**

| **nnpfc_out_ order_idc** | **Description** |
|---|---|
| 0 | Only the luma matrix is present in the output tensor, thus the number of channels is 1. |
| 1 | Only the chroma matrices are present in the output tensor, thus the number of channels is 2. |
| 2 | The luma and chroma matrices are present in the output tensor, thus the number of channels is 3. |
| 3 | Four luma matrices and two chroma matrices are present in the output tensor, thus the number of channels is 6. This nnpfc_out_order_idc can only be used when the output chroma format is 4:2:0. |
| 4..255 | Reserved |

nnpfc_out_tensor_luma_bitdepth_minus8 plus 8 specifies the bit depth of luma sample values in the output integer tensor. The value of nnpfc_out_tensor_luma_bitdepth_minus8 shall be in the range of 0 to 24, inclusive. The value of outTensorBitDepthY is derived as Table 18.

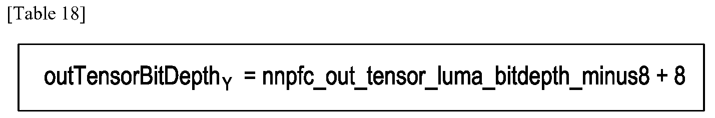

nnpfc_out_tensor_chroma_bitdepth_minus8 plus 8 specifies the bit depth of chroma sample values in the output integer tensor. The value of nnpfc_out_tensor_chroma_bitdepth_minus8 shall be in the range of 0 to 24, inclusive. The value of outTensorBitDepthC is derived as Table 19.

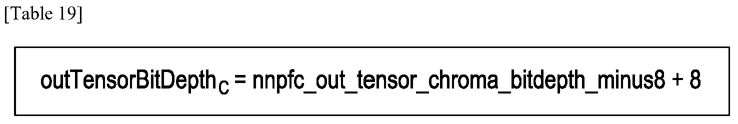

When bitDepthUpsamplingFlag is equal to 1, the value of nnpfc_out_format_idc shall be equal to 1 and at least one of the following conditions shall be true:
- nnpfc_out_tensor_luma_bitdepth_minus8 is present and outTensorBitDepthY is greater than BitDepthY.
- nnpfc_out_tensor_chroma_bitdepth_minus8 is present and outTensorBitDepthC is greater than BitDepthC.

When nnpfc_inp_tensor_luma_bitdepth_minus8, nnpfc_inp_tensor_chroma_bitdepth_minus8, nnpfc_out_tensor_luma_bitdepth_minus8, and nnpfc_out_tensor_chroma_bitdepth_minus8 are present and outTensorBitDepthY is greater than inpTensorBitDepthY, outTensorBitDepthC shall not be less than inpTensorBitDepthC. When nnpfc_inp_tensor_luma_bitdepth_minus8, nnpfc_inp_tensor_chroma_bitdepth_minus8, nmpfc_out_tensor_luma_bitdepth_minus8, and nnpfc_out_tensor_chroma_bitdepth_minus8 are present and outTensorBitDepthC is greater than inpTensorBitDepthC, outTensorBitDepthY shall not be less than inpTensorBitDepthY.

When nnpfc_inp_tensor_luma_bitdepth_minus8, nnpfc_inp_tensor_chroma_bitdepth_minus8, nnpfc_out_tensor_luma_bitdepth_minus8, and nnpfc_out_tensor_chroma_bitdepth_minus8 are present and outTensorBitDepthY is greater than inpTensorBitDepthY, outTensorBitDepthC shall not be less than inpTensorBitDepthC. When nnpfc_inp_tensor_luma_bitdepth_minus8, nnpfc_inp_tensor_chroma_bitdepth_minus8, nnpfc_out_tensor_luma_bitdepth_minus8, and nnpf _out_tensor_chroma_bitdepth_minus8 are present and outTensorBitDepthC is greater than inpTensorBitDepthC, outTensorBitDepthY shall not be less than inpTensorBitDepthY.

The process StoreOutputTensors( ), for deriving sample values in the filtered output sample arrays FilteredYPic, FilteredCbPic, and FilteredCrPic from the output tensor outputTensor for a given vertical sample coordinate cTop and a horizontal sample coordinate cLeft specifying the top-left sample location for the patch of samples included in the input tensor, is specified as Table 20.

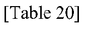

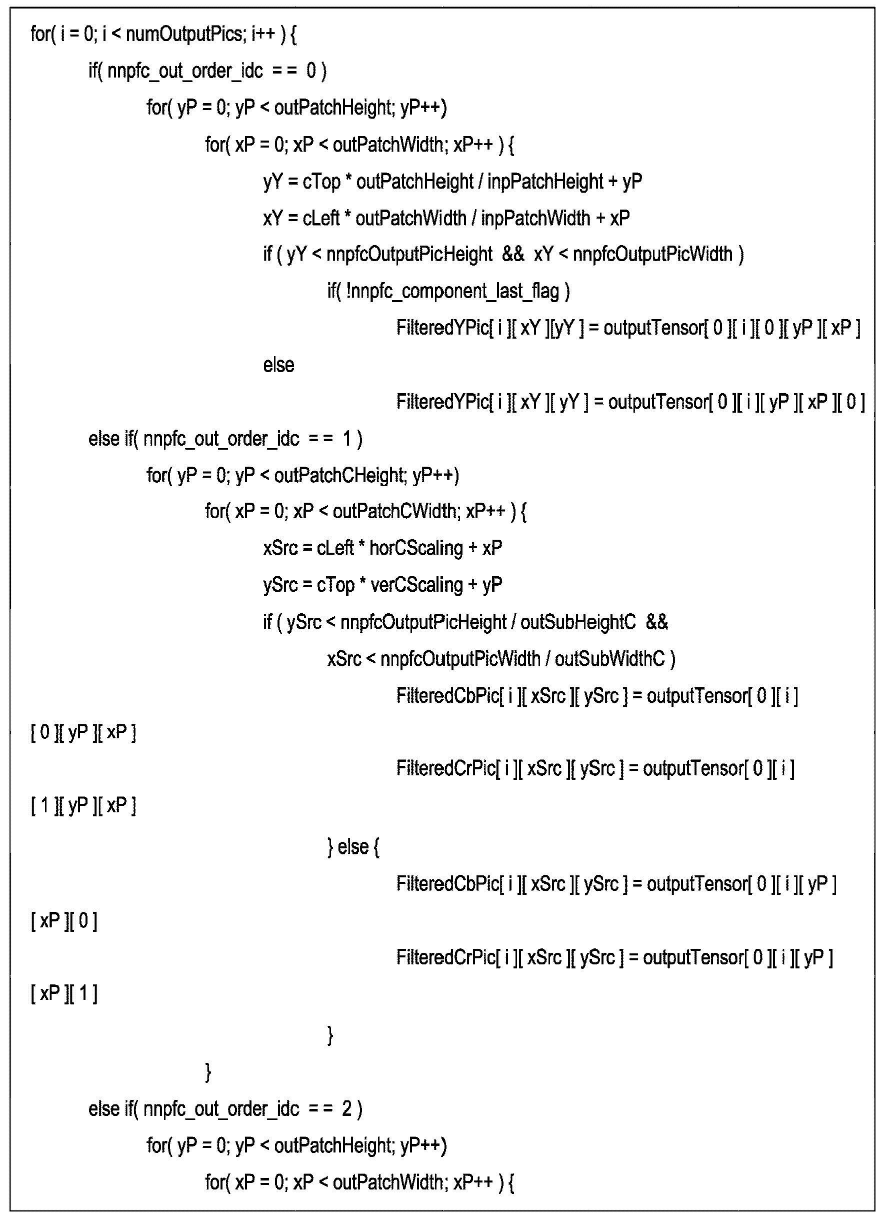

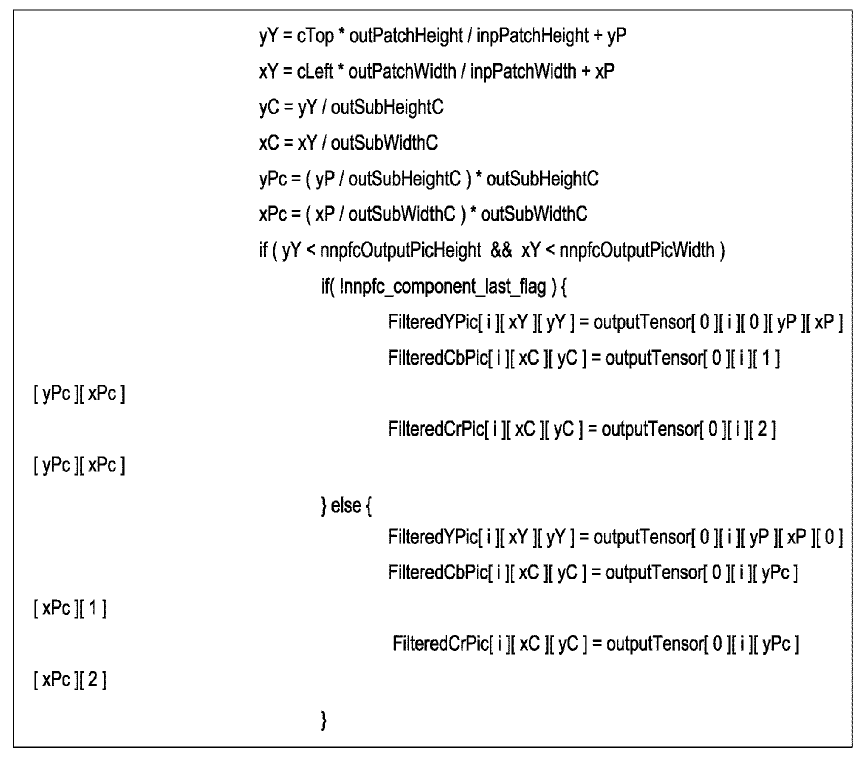

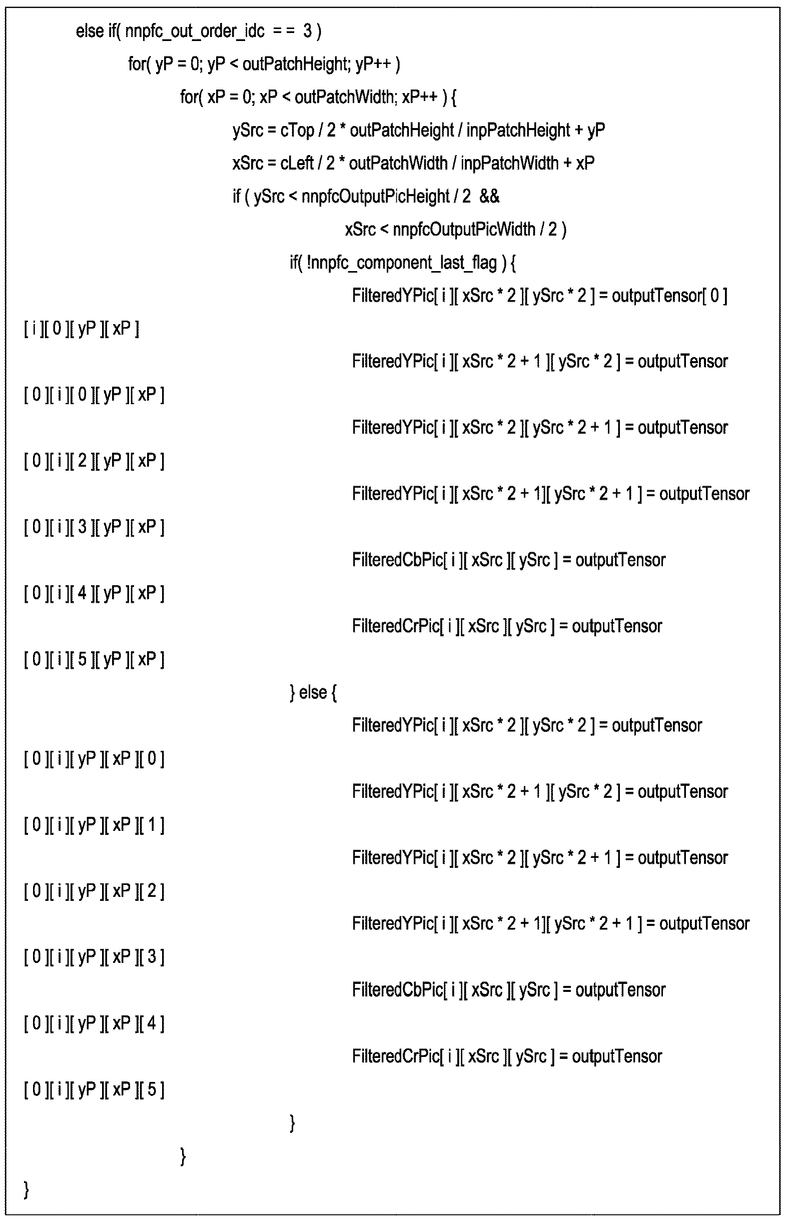

nnpfc_separate colour description_present_ flag equal to 1 indicates that a distinct combination of colour primaries, transfer characteristics, matrix coefficients, and scaling and offset values applied in association with the matrix coefficients for the picture resulting from the NNPF is specified in the SEI message syntax structure. nnpfc_separate_colour_description_present flag equal to 0 indicates that the combination of colour primaries, transfer characteristics, matrix coefficients, and scaling and offset values applied in association with the matrix coefficients for the picture resulting from the NNPF is the same as indicated in VUI parameters for the CLVS.

nnpfc _colour_primaries has the same semantics as specified in subclause 7.3 for the vui_colour_primaries syntax element, except as follows:
- nnpfc _colour_primaries specifies the colour primaries of the picture resulting from applying the NNPF specified in the SEI message, rather than the colour primaries used for the CLVS.
- When nnpfc _colour_primaries is not present in the NNPFC SEI message, the value of nnpfc _colour_primaries is inferred to be equal to vui_colour_primaries.

nnpfc_transfer_characteristics has the same semantics as specified in subclause 7.3 for the vui_transfer_characteristics syntax element, except as follows:
- nnpfc_transfer_characteristics specifies the transfer characteristics of the picture resulting from applying the NNPF specified in the SEI message, rather than the transfer characteristics used for the CLVS.
- When nnpfc_transfer_characteristics is not present in the NNPFC SEI message, the value of nnpfc_transfer_characteristics is inferred to be equal to vui_transfer_characteristics.

nnpfc_matrix_coeffs describes the equations used in deriving luma and chroma signals from the green, blue, and red, or Y, Z, and X primaries. Its semantics apply to the pictures resulting from applying the NNPF specified in this SEI message and are as specified for MatrixCoefficients in Rec. ITU-T H.273 | ISO/IEC 23091-2 with BitDepthY and BitDepthC being equal to outTensorBitDepthY and outTensorBitDepthC, respectively.

When nnpfc_matrix_coeffs is not present in the NNPFC SEI message, the value of nnpfc_matrix_coeffs is inferred to be equal to vui_matrix_coeffs.

nnpfc_matrix_coeffs shall not be equal to 0 unless both of the following conditions are true:
- nnpfc_out_tensor_chroma_bitdepth_minus8 is equal to nnpfc_out_tensor_luma_bitdepth_minus8.
- nnpfc_out_order_idc is equal to 2, outSubHeightC is equal to 1, and outSubWidthC is equal to 1.

nnpfc_matrix_coeffs shall not be equal to 8 unless one of the following conditions is true:
- nnpfc_out_tensor_chroma_bitdepth_minus8 is equal to nnpfc_out_tensor_luma_bitdepth_minus8.
- nnpfc_out_tensor_chroma_bitdepth_minus8 is equal to nnpfc_out_tensor_luma_bitdepth_minus8 + 1, nnpfc_out_order_idc is equal to 2, outSubHeightC is equal to 1, and outSubWidthC is equal to 1.

nnpfc_full_range_flag indicates the scaling and offset values applied in association with the matrix coefficients as specified by nnpfc_matrix_coeffs. Its semantics are as specified for the VideoFullRangeFlag parameter in Rec. ITU-T H.273 | ISO/IEC 23091-2. When not present, the value of nnpfc_full_range_flag is inferred to be equal to 0.

nnpfc_chroma_loc_info_present_flag equal to 1 indicates the presence of the nnpfc_chroma_sample_loc_type_frame syntax element in the NNPFC SEI message. nnpfc_chroma_loc_info_present_flag equal to 0 indicates the absence of the nnpfc_chroma_sample_loc_type_frame syntax element in the NNPFC SEI message. When colourizationFlag is equal to 0 or nnpfc_out_colour_format idc is not equal to 1, the value of nnpfc_chroma_loc_info_present_flag shall be equal to 0.

nnpfc_chroma_sample_loc_type_frame, when not equal to 6 and nnpfc_out_colour_format_idc is equal to 1, specifies the location of chroma samples of the output pictures. nnpfc_chroma_sample_loc_type_frame equal to 6 and nnpfc_out colour format idc_equal to 1 indicates that the location of the chroma samples is unknown or unspecified or specified by other means not specified in this document. The value of nnpfc_chroma_sample_loc_type_frame shall be in the range of 0 to 6, inclusive.

nnpfc_overlap indicates the overlapping horizontal and vertical sample counts of adjacent input tensors of the NNPF. The value of nnpfc_overlap shall be in the range of 0 to 16 383, inclusive.

nnpfc constant_patch_size_flag equal to 1 indicates that the NNPF accepts exactly the patch size indicated by nnpfc_patch_width_minus1 and nnpfc_patch_height_minus1 as input. nnpfc_constant_patch_size_flag equal to 0 indicates that the NNPF accepts as input any patch size with width inpPatchWidth and height inpPatchHeight such that the width of an extended patch (i.e., a patch plus the overlapping area), which is equal to inpPatchWidth + 2 * nnpfc_overlap, is a positive integer multiple of nnpfc_extended_patch_width_cd_delta_minus1 + 1 + 2 * nnpfc_overlap, and the height of the extended patch, which is equal to inpPatchHeight + 2 * nnpfc_overlap, is a positive integer multiple of nnpfc extended_patch_height_cd_delta_minus1 + 1 + 2 * nnpfc_overlap.

nnpfc_patch_width_minus1 plus 1, when nnpfc constant_patch_size_flag equal to 1, indicates the horizontal sample counts of the patch size required for the input to the NNPF. The value of nnpfc_patch_width_minus1 shall be in the range of 0 to Min( 32 766, CroppedWidth - 1 ), inclusive.

nnpfc_patch_height_minus1 plus 1, when nnpfc_constant_patch_size_flag equal to 1, indicates the vertical sample counts of the patch size required for the input to the NNPF. The value of nnpfc_patch_height_minus1 shall be in the range of 0 to Min( 32 766, CroppedHeight - 1 ), inclusive.

nnpfc _extended_patch width_cd_delta_minus1 plus 1 plus 2 * nnpfc_overlap, when nnpfc_constant_patch_size_flag equal to 0, indicates a common divisor of all allowed values of the width of an extended patch required for the input to the NNPF. The value of nnpfc_extended_patch_width_cd_delta_minus1 shall be in the range of 0 to Min( 32 766, CroppedWidth - 1 ), inclusive.

nnpfc_extended_patch_height_cd_delta_minus1 plus 1 plus 2 * nnpfc_overlap, when nnpfc_constant_patch_size_flag equal to 0, indicates a common divisor of all allowed values of the height of an extended patch required for the input to the NNPF. The value of nnpfc_extended_patch_height_cd_delta_minus1 shall be in the range of 0 to Min( 32 766, CroppedHeight - 1 ), inclusive.

Let the variables inpPatchWidth and inpPatchHeight be the patch size width and the patch size height, respectively.

If nnpfc_constant_patch_size_flag is equal to 0, the following applies:
- The values of inpPatchWidth and inpPatchHeight are either provided by external means not specified in this document or set by the post-processor itself.
- The value of inpPatchWidth + 2 * nnpfc_overlap shall be a positive integer multiple ofnnpfc_extended_patch_width_cd_delta_minus1 + 1 + 2 * nnpfc_overlap and inpPatchWidth shall be less than or equal to CroppedWidth. The value of inpPatchHeight + 2 * nnpfc_overlap shall be a positive integer multiple ofnnpfc_extended_patch_height_cd_delta_minus1 + 1 + 2 * nnpfc_overlap and inpPatchHeight shall be less than or equal to CroppedHeight.

Otherwise (nnpfc_constant_patch_size_flag is equal to 1), the value of inpPatchWidth is set equal to nnpfc_patch_width_minus1 + 1 and the value of inpPatchHeight is set equal to nnpfc_patch_height_minus1 + 1.

The variables outPatchWidth, outPatchHeight, horCScaling, verCScaling, outPatchCWidth, and outPatchCHeight are derived as Table 21.

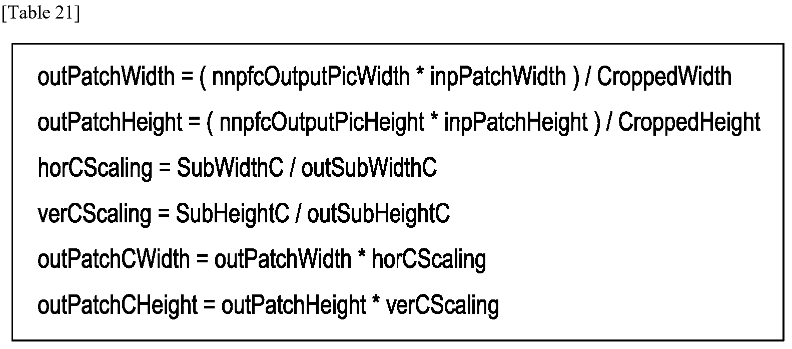

It is a requirement of bitstream conformance that outPatchWidth * CroppedWidth shall be equal to nnpfcOutputPicWidth * inpPatchWidth and outPatchHeight * CroppedHeight shall be equal to nnpfcOutputPicHeight * inpPatchHeight.

nnpfc_padding_type indicates the process of padding when referencing sample locations outside the boundaries of the input picture as described in Table 22.

**[Table 22]**

| **nnpfc_padding_type** | **Description** |
|---|---|
| 0 | Zero padding |
| 1 | Replication padding |
| 2 | Reflection padding |
| 3 | Wrap-around padding |
| 4 | Fixed padding |
| 5..15 | reserved |

The value of nnpfc_padding_type shall be in the range of 0 to 4, inclusive, in bitstreams conforming to this document. Values of 5 to 15, inclusive, for nnpfc_padding_type are reserved for future use by ITU-T | ISO/IEC and shall not be present in bitstreams conforming to this edition of this document. Decoders conforming to this edition of this document shall ignore NNPFC SEI messages with nnpfc_padding_type in the range of 5 to 15, inclusive. Values of nnpfc_padding_type greater than 15 shall not be present in bitstreams conforming to this edition of this document and are not reserved for future use.

nnpfc_luma_padding_val indicates the luma value to be used for padding when nnpfc_padding_type is equal to 4. The value of nnpfc_luma_padding_val shall be in the range of 0 to ( 1 << BitDepthY ) - 1, inclusive.

nnpfc_cb_padding_val indicates the Cb value to be used for padding when nnpfc_padding_type is equal to 4. The value of nnpfc_cb_padding_val shall be in the range of 0 to ( 1 << BitDepthC ) - 1, inclusive.

nnpfc_cr_padding_val indicates the Cr value to be used for padding when nnpfc_padding_type is equal to 4. The value of nnpfc_cr_padding_val shall be in the range of 0 to (1 << BitDepthC ) - 1, inclusive.

The function InpSampleVal( y, x, picHeight, picWidth, croppedPic, cIdx ) with inputs being a vertical sample location y, a horizontal sample location x, a picture height picHeight, a picture width picWidth, sample array croppedPic, and component index cIdx (equal to 0 for luma, 1 for Cb, and 2 for Cr) returns the value of sampleVal derived as Table 23.

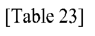

[Table 23]

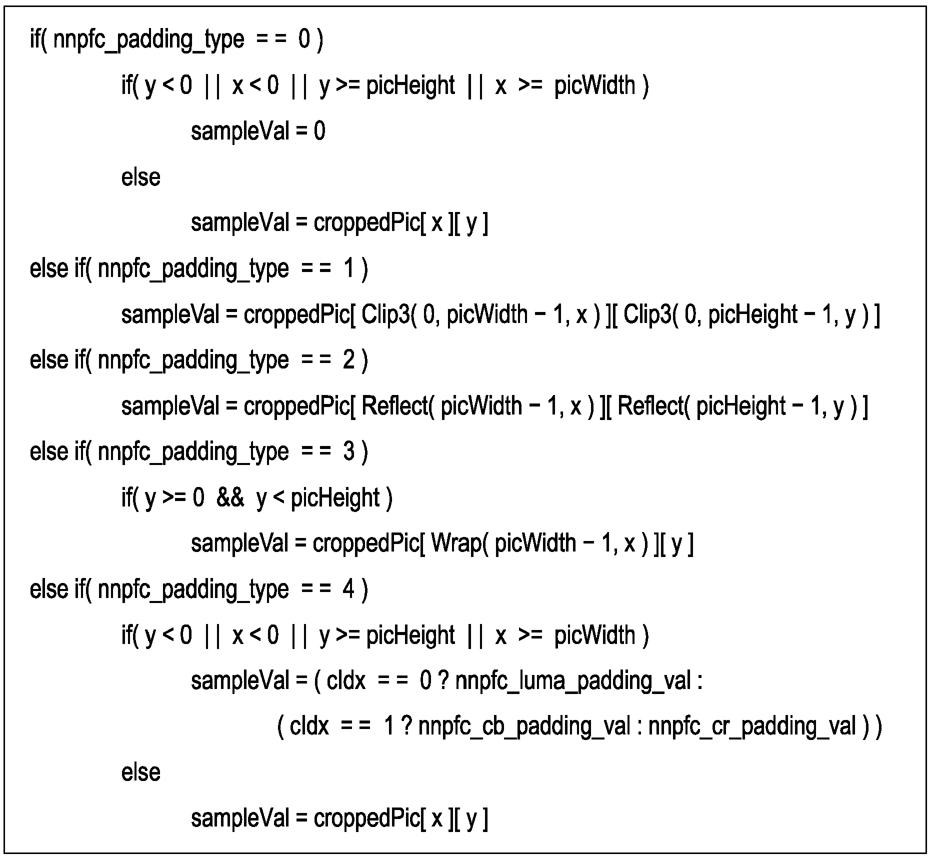

As a note, for the inputs to the function InpSampleVal( ), the vertical location is listed before the horizontal location for compatibility with input tensor conventions of some inference engines.

An NNPF PostProcessingFilter( ) is the target NNPF as derived in the semantics of the NNPFA SEI message. The example process of Table 24 may be used, with the NNPF PostProcessingFilter( ), to generate, in a patch-wise manner, the filtered and/or interpolated picture(s), which contain Y, Cb, and Cr sample arrays FilteredYPic, FilteredCbPic, and FilteredCrPic, respectively, as indicated by nnpfc_out_order idc:

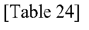

[Table 24]

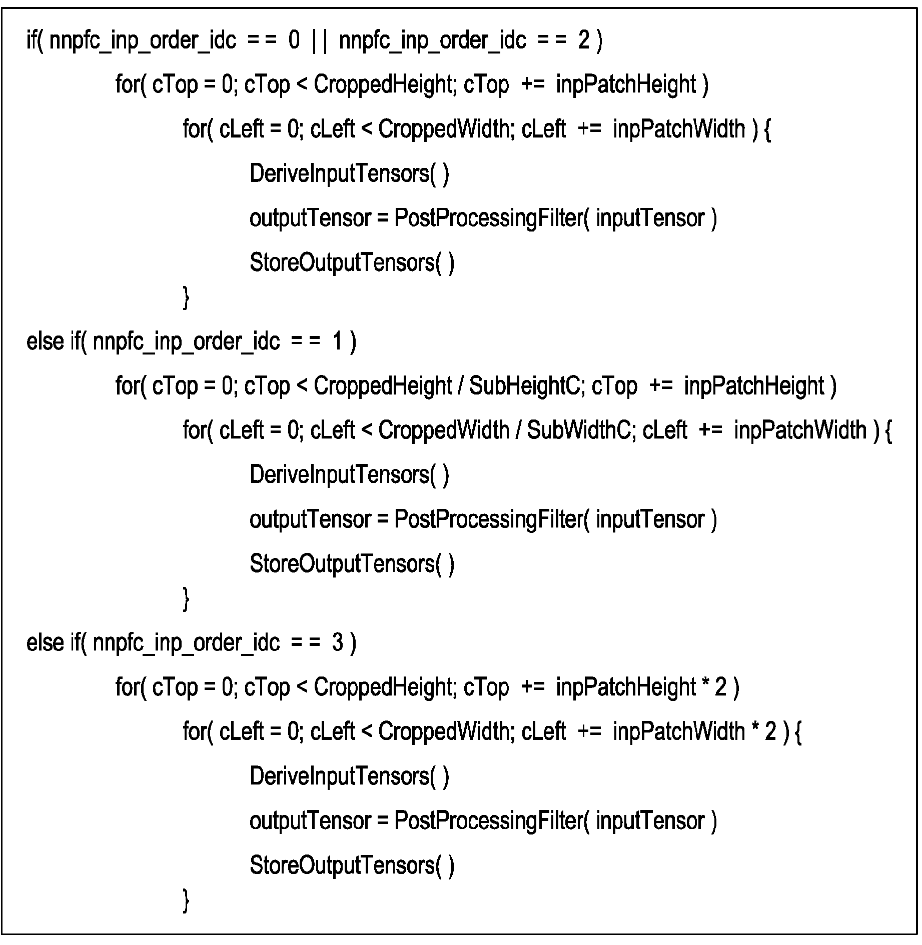

An NNPF-generated picture with index i contains sample arrays FilteredYPic[ i ], FilteredCbPic[ i ], and FilteredCrPic[ i ], when present, that are derived by Formula 99. An NNPF-generated picture does not include the overlap regions.

The NNPF process consists of the process defined by Table 24 followed by outputting NNPF-generated pictures in their increasing index order. Here. all NNPF-generated pictures that were interpolated by the NNPF are output and those NNPF-generated pictures that correspond to any input pictures to the NNPF are output as specified in the semantics of the NNPFA SEI message.

nnpfc_complexity_info_present flag equal to 1 specifies that one or more syntax elements that indicate the complexity of the NNPF associated with the nnpfc_id are present. nnpfc_complexity_info_present_flag equal to 0 specifies that no syntax elements that indicates the complexity of the NNPF associated with the nnpfc_id are present.

nnpfc_parameter_type_idc equal to 0 indicates that the neural network uses only integer parameters. nnpfc_parameter_type_flag equal to 1 indicates that the neural network may use floating point or integer parameters. nnpfc_parameter_type_idc equal to 2 indicates that the neural network uses only binary parameters. nnpfc_parameter_ type_idc equal to 3 is reserved for future use by ITU-T | ISO/IEC and shall not be present in bitstreams conforming to this edition of this document. Decoders conforming to this edition of this document shall ignore NNPFC SEI messages with nnpfc_parameter_type_idc equal to 3.

nnpfc_log2_parameter_bit length minus3 equal to 0, 1, 2, and 3 indicates that the neural network does not use parameters of bit length greater than 8, 16, 32, and 64, respectively. When nnpfc_parameter_type_idc is present and nnpfc_log2_parameter_bit_length_minus3 is not present, the neural network does not use parameters of bit length greater than 1.

nnpfc_num_idc indicates the maximum number of neural network parameters for the NNPF in units of a power of 2 048. nnpfc_num_parameters_idc equal to 0 indicates that the maximum number of neural network parameters is unknown. The value nnpfc_num_parameters_ide shall be in the range of 0 to 52, inclusive. Values of nnpfc_num_parameters_idc greater than 52 are reserved for future use by ITU-T | ISO/IEC and shall not be present in bitstreams conforming to this edition of this document. Decoders conforming to this edition of this document shall ignore NNPFC SEI messages with nnpfc num_parameters_idc greater than 52.

If the value of nnpfc_num_parameters_idc is greater than zero, the variable maxNumParameters is derived as Table 25.

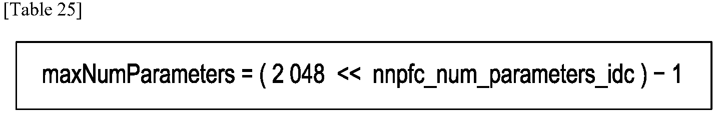

It is a requirement of bitstream conformance that the number of neural network parameters of the NNPF shall be less than or equal to maxNumParameters.

nnpfc num kmac_operations_idc greater than 0 indicates that the maximum number of multiply-accumulate operations per sample of the NNPF is less than or equal to nnpfc_num_kmac_operations_idc * 1 000. nnpfc num kmac_operations_idc equal to 0 indicates that the maximum number of multiply-accumulate operations of the network is unknown. The value of nnpfc num kmac_operations_idc shall be in the range of 0 to 2³² - 2, inclusive.

nnpfc total_kilobyte_size greater than 0 indicates a total size in kilobytes required to store the uncompressed parameters for the neural network. The total size in bits is a number equal to or greater than the sum of bits used to store each parameter. nnpfc_total_kilobyte_size is the total size in bits divided by 8 000, rounded up. nnpfc_total_kilobyte size equal to 0 indicates that the total size required to store the parameters for the neural network is unknown. The value of nnpfc_total_kilobyte_size shall be in the range of 0 to 2³² - 2, inclusive.

nnpfc_metadata_extension_num bits equal to 0 specifies that nnpfc_reserved_metadata_extension is not present. nnpfc_metadata_extension num bits greater than 0 specifies the length, in bits, of nnpfc_reserved_metadata_extension. nnpfc_metadata_extension_num_bits shall be equal to 0 in this edition of this document. Values in the range of 1 to 2 048, inclusive, for nnpfc_metadata_extension_num_bits are reserved for future use by ITU-T | ISO/IEC and shall not be present in bitstreams conforming to this edition of this document. Decoders conforming to this edition of this document shall allow any value of nnpfc_metadata_extension_num_bits in the range of 0 to 2 048, inclusive. Values of nnpfc_metadata_extension_num_bits greater than 2 048 shall not be present in bitstreams conforming to this edition of this document and are not reserved for future use.

nnpfc_reserved_metadata_extension_shall not be present in bitstreams conforming to this edition of this document. However, decoders conforming to this edition of this document shall ignore the presence and value of nnpfc_reserved_metadata_extension. When present, the length, in bits, of nnpfc_reserved_metadata_extension_is equal to nnpfc_metadata_extension_num_bits.

nnpfc_reserved_zero_bit_b shall be equal to 0 in bitstreams conforming to this edition of this document. Decoders shall ignore NNPFC SEI messages in which nnpfc reserved_zero_bit_b is not equal to 0.

nnpfc_payload_byte[ i ] contains the i-th byte of a bitstream conforming to ISO/IEC 15938-17. The byte sequence nnpfc_payload_byte[ i ] for all present values of i shall be a complete bitstream that conforms to ISO/IEC 15938-17.

Neural-network post-filter activation (NNPFA) SEI message

Table 26 shows an example of the NNPFA SEI message syntax.

**[Table 26]**

| | |
|---|---|
| nn_post_ filter_activation( payloadSize ) { | **Descriptor** |
| **nnpfa_target_id** | ue(v) |
| **nnpfa_cancel_flag** | u(1) |
| if( !nnpfa_cancel_flag ) { | |
| **nnpfa_target_base_flag** | u(1) |
| **nnpfa_persistence_flag** | u(1) |
| **nnpfa_num_output_entries** | ue(v) |
| for( i = 0; 1 < nnpfa_num_output_entries; i++ ) | |
| **nnpfa_output_flag**[ i ] | u(1) |
| } | |
| } | |

The neural-network post-filter activation (NNPFA) SEI message activates or de-activates the possible use of the target neural-network post-processing filter (NNPF), identified by nnpfa_target_id and nnpfa_target_base_flag, for post-processing filtering of a set of pictures. For a particular picture for which the NNPF is activated, the target NNPF is derived as follows:
- If nnpfa_target_base_flag is equal to 1, the target NNPF is the base NNPF with nnpfc_id equal to nnpfa_target_id.
- Otherwise (nnpfa_target_base_flag is equal to 0), the target NNPF is the NNPF specified by the last NNPFC SEI message with nnpfc_id equal to nnpfa_target id that precedes the first VCL NAL unit of the current picture in decoding order and is not a repetition of the NNPFC SEI message that contains the base NNPF.

As a note, there can be several NNPFA SEI messages present for the same picture, for example, when the NNPFs are meant for different purposes or for filtering of different colour components.

nnpfa_target_id indicates the target NNPF, which is specified by one or more NNPFC SEI messages that pertain to the current picture and have nnpfc_id equal to nnpfa_target_id. The value of nnpfa_target_id shall be in the range of 0 to 2³² - 2, inclusive.

An NNPFA SEI message with a particular value of nnpfa_target_id shall not be present in a current PU unless one or both of the following conditions are true:
- Within the current CLVS there is an NNPFC SEI message with nnpfc_id equal to the particular value of nnpfa_target_id present in a PU preceding the current PU in decoding order.
- There is an NNPFC SEI message with nnpfc_id equal to the particular value of nnpfa_target_id in the current PU.

When a PU contains both an NNPFC SEI message with a particular value of nnpfc_id and an NNPFA SEI message with nnpfa_target_id equal to the particular value of nnpfc_id, the NNPFC SEI message shall precede the NNPFA SEI message in decoding order.

nnpfa_cancel_flag equal to 1 indicates that the persistence of the target NNPF established by any previous NNPFA SEI message with the same nnpfa_target_id as the current SEI message is cancelled, i.e., the target NNPF is no longer used unless it is activated by another NNPFA SEI message with the same nnpfa_target_id as the current SEI message and nnpfa_cancel_flag equal to 0. nnpfa_cancel_flag equal to 0 indicates that the nnpfa_target_base_flag, nnpfa_persistence_flag, and nnpfa_num_output_entries follow.

nnpfa_target_base_flag equal to 1 specifies that the target NNPF is the base NNPF with nnpfc_id equal to nnpfa_target_id. nnpfa_target_base_flag equal to 0 specifies that the target NNPF is the NNPF specified by the last NNPFC SEI message with nnpfc_id equal to nnpfa_target_id that precedes the first VCL NAL unit of the current picture in decoding order and is not a repetition of the NNPFC SEI message that contains the base NNPF.

nnpfa_persistence_flag specifies the persistence of the target NNPF for the current layer.

nnpfa_persistence_flag equal to 0 specifies that the target NNPF may be used for post-processing filtering for the current picture only.

nnpfa_persistence_flag equal to 1 specifies that the target NNPF may be used for post-processing filtering for the current picture and all subsequent pictures of the current layer in output order until one or more of the following conditions are true:
- A new CLVS of the current layer begins.
- The bitstream ends.
- A picture in the current layer associated with a NNPFA SEI message with the same nnpfa_target_id as the current SEI message and nnpfa_cancel_flag equal to 1 is output that follows the current picture in output order.

As a note, the target NNPF is not applied for this subsequent picture in the current layer associated with a NNPFA SEI message with the same nnpfa_target_id as the current SEI message and nnpfa_cancel_flag equal to 1.

Let the nnpfcTargetPictures be the set of pictures to which the last NNPFC SEI message with nnpfc_id equal to nnpfa_target_id that precedes the current NNPFA SEI message in decoding order pertains. Let nnpfaTargetPictures be the set of pictures for which the target NNPF is activated by the current NNPFA SEI message. It is a requirement of bitstream conformance that any picture included in nnpfaTargetPictures shall also be included in nnpfcTargetPictures.

nnpfa_num_output entries specifies the number of nnpfa_output_flag[ i ] syntax elements present in the NNPFA SEI message. The value of nnpfa_num_output_entries shall be in the range of 0 to NumInpPicsInOutputTensor, inclusive.

nnpfa_output_flag[ i ] equal to 1 specifies that the NNPF-generated picture that corresponds to the input picture having index InpIdx[ i ] is output by the NNPF process activated by this NNPFA SEI message, where the NNPF process is specified in the semantics of the NNPFC SEI message. nnpfa_output_flag[ i ] equal to 0 specifies that the NNPF-generated picture that corresponds to the input picture having index InpIdx[ i ] is not output by the NNPF process activated by this NNPFA SEI message. When nnpfa_num_output_entries is less than NumInpPicsInOutputTensor, nnpfa_output_flag[ i ] is inferred to be equal to 1 for each value of i in the range of nnpfa_num_output_entries to NumInpPicsInOutputTensor - 1, inclusive.

Neural-network post-filter group characteristics (NNPFGC) SEI message

Table 27 shows an example of the NNPFGC SEI message syntax.

**[Table 27]**

| | |
|---|---|
| nn_post_filter_group_characteristics( payloadSize ) { | **Descriptor** |
| **nnpfgc_id** | ue(v) |
| **nnpfgc_grouping_type** | ue(v) |
| if( nnpfgc_grouping_type = = 0 ∥ nnpfgc_grouping_type = = 2) | |
| **nnpfgc_purpose** | u(16) |
| **nnpfgc_num_members_minus2** | ue(v) |
| for( 1 = 0; 1 <= nnpfgc_num_members_minus2 + 1; i++ ) | |
| **nnpfgc_member_id[ i ]** | ue(v) |
| **nnpfgc_complexity_info_present_flag** | u(1) |
| if( nnpfgc_complexity_info_present_flag ) { | |
| **nnpfgc_parameter_type_idc** | u(2) |
| if( nnpfgec_parameter_type_idc != 2 ) | |
| **nnpfgc_log2_parameter_bit_length_minus3** | u(2) |
| **nnpfgc_num_parameters_idc** | u(6) |
| **nnpfgc_num_kmac_operations_idc** | ue(v) |
| **nnpfgc_total_kilobyte_size** | ue(v) |
| } | |
| } | |

The neural-network post-filter group characteristics (NNPFGC) SEI message specifies a neural network post-filter (NNPF) group. It is indicated by the SEI message if the NNPF group defines an NNPF cascade or defines NNPFs or NNPF groups of NNPF cascades that are alternatives to each other. The use of NNPF groups of NNPF cascades for specific pictures is indicated with neural-network post-filter group activation (NNPFGA) SEI messages.

nnpfgc_id contains an identifying number that may be used to identify an NNPF group. The value of nnpfgc_id shall be in the range of 0 to 2³² - 2, inclusive. Values of nnpfgc_id from 256 to 511, inclusive, and from 2³¹ to 2³² - 2, inclusive, are reserved for future use by ITU-T| ISO/IEC. Decoders conforming to this edition of this document encountering an NNPFGC SEI message with nnpfgc_id in the range of 256 to 511, inclusive, or in the range of 2³¹ to 2³² - 2, inclusive, shall ignore the SEI message. The value of nnpfgc_id shall not be equal to any nnpfc_id value of any NNPFC SEI message present in the same CLVS. When the value of nnpfgc_id of an NNPFGC SEI message nnpfgcSeiA is equal to the value of nnpfgc_id of another NNPFGC SEI message nnpfgcSeiB present in the same CLVS, nnpfgcSeiA and nnpfgcSeiB shall be identical.

nnpfgc_grouping_type equal to 0 indicates that this SEI message specifies a group of cascaded neural-network postfilters.

nnpfgc_grouping_type equal to 1 indicates that the NNPFs or NNPF groups identified by the nnpfgc_member_id[ i ] are alternatives to each other out of which the post-processor should select only one to be applied.

nnpfgc_grouping_type equal to 2 indicates that this SEI message specifies a group of NNPFs that are intended to be used jointly and are activated in an alternating manner so that at most one of these NNPFs is activate for any picture.

nnpfgc_grouping_type equal to 3 indicates that the NNPFs or NNPF groups identified by the nnpfgc_member_id[ i ] are intended to be used in parallel.

nnpfgc_grouping_type equal to 4 indicates that the NNPFs or NNPF groups identified by the nnpfgc_member_id[ i ] are optional, i.e., may or may not be applied by the post-processor.

The value of nnpfgc_grouping_type shall be in the range of 0 to 255, inclusive. Values of nnpfgc_grouping_type in the range of 5 to 255, inclusive, are reserved for future specification by ITU-T | ISO/IEC and shall not be present in bitstreams conforming to this edition of this document. Decoders conforming to this document shall ignore NNPFGC SEI messages with nnpfgc_grouping_type in the range of 5 to 255, inclusive.

nnpfgc_purpose has the semantics of nnpfc_purpose but with the exception that the semantics are specified for the NNPF group defined by this SEI message rather than the NNPF defined by an NNPFC SEI message.

nnpfgc_num_members_minus2 plus 2 indicates the number of NNPFs or NNPF groups in the NNPF group that this SEI message defines.

nnpfgc_member_id[ i ] indicates the i-th member in the NNPF group defined by this SEI message as follows:
- If there is an NNPF with nnpfc_id equal to nnpfgc_member_id[ i ] defined in the CLVS, the i-th member in the NNPF group defined by this SEI message is an NNPF that has nnpfc_id equal to nnpfgc_member_id[ i ].
- Otherwise (there is no NNPF with nnpfc_id equal to nnpfgc_member_id[ i ] defined in the CLVS), the i-th member in the NNPF group defined by this SEI message is an NNPF group with nnpfgc_id equal to nnpfgc_member_id[ i ].

When an nnpfgc_member_id[ i ] value references an nnpfgc_id value of an NNPFGC SEI message nnpfgcSei, it is a requirement of bitstream conformance that the NNPFGC SEI message nnpfgcSei shall have nnpfgc_grouping_type equal to 0. When nnpfgc_grouping_type is equal to 0 or 2, it is a requirement of bitstream conformance that there is an NNPF with nnpfc_id value equal to nnpfgc_member_id[ i ] defined in the CLVS. When nnpfgc_grouping_type is equal to 1, 3, or 4, it is a requirement of bitstream conformance that there is an NNPF with nnpfc_id value equal to nnpfgc_member_id[ i ] or an NNPF group with nnpfgc_id value equal to nnpfgc_member_id[ i ] defined in the CLVS.

When nnpfgc_grouping_type is equal to 0, the NNPFs with nnpfc_id equal to nnpfgc_member_id[ i ] are performed in cascade in increasing order of i, as activated by an NNPFGA SEI message with nnpfga_target_id equal to nnpfgc_id.

nnpfgc_complexity_info_present_flag, nnpfgc_parameter_type_idc, nnpfgc_log2_parameter_bit_length_minus3, nnpfgc_num_parameters_ide, nnpfgc_num_kmac_operations_idc, and nnpfgc_total_kilobyte_size have the semantics of nnpfc_complexity_info_present_flag, nnpfc_parameter_type_idc, nnpfc_log2_parameter_bit_length_minus3, nnpfc_num_parameters_idc, nnpfc_num_kmac_operations_idc, and nnpfc_total_kilobyte_size, respectively, but with the exception that the semantics are specified for the NNPF group defined by this SEI message rather than the NNPF defined by an NNPFC SEI message. When nnpfgc_grouping_type is equal to 1, nnpfgc_complexity_info_present flag shall be equal to 0.

Neural-network post-filter group activation (NNPFGA) SEI message

Table 28 shows an example of the NNPFGA SEI message syntax.

**[Table 28]**

| | |
|---|---|
| nn_post_filter_group_activation( payloadSize ) { | **Descriptor** |
| **nnpfga_target_id** | ue(v) |
| **nnpfga_cancel_flag** | u(1) |
| if( !nnpfga_cancel_flag) { | |
| **nnpfga_persistence_flag** | u(1) |
| **nnpfga_num_filters_minus2** | ue(v) |
| for( i = 0; 1 <= nnpfga_num_filters_minus2 + 1; i++ ) { | |
| **nnpfga_target_base_flag**[ i ] | u(1) |
| **nnpfga_input_all_pics_flag**[ i ] | u(1) |
| if( !nnpfga_input_all_pics_flag[ i ] ) { | |
| **nnpfga_num_input_pics_minus1**[ i ] | ue(v) |
| for(j = 0; j <= nnpfga_num_input_pics_minus1[ i ]; j++ ) | |
| **nnpfga_num_input_pics_minus1**[ i ] | ue(v) |
| } | |
| **nnpfga_num_output_entries**[ i ] | ue(v) |
| for(j = 0; j < nnpfga_num_output_entries[ i ]; j++ ) | |
| **nnpfga_output_flag**[ i ] [ j ] | u(1) |
| } | |
| } | |
| } | |

The neural-network post-filter group activation (NNPFGA) SEI message activates or de-activates the possible use of the target neural-network post-processing filter group (NNPFG) of NNPF groups, identified by nnpfga_target_id, for post-processing filtering of a set of pictures. nnpfgc_grouping_type for the identfied NNPF group shall be equal to 0 (cascade) or 1 (alternatives). When nnpfgc_grouping_type is equal to 1, each member of the group shall have the same number of input pictures and NNPF output pictures. For a particular picture for which the NNPFG is activated, the target NNPFG is the NNPFG specified by the last NNPFGC SEI message with nnpfgc_id equal to nnpfga_target_id, that precedes the first VCL NAL unit of the current picture in decoding order and the NNPFs of the target NNPFG are defined by the NNPFC SEI messages that have nnpfc_id equal to any nnpfgc_member_id[ i ] value of the target NNPFG and are present in the current picture unit or precede the current picture in decoding order.

Use of this SEI message requires the definition of the following variables:
- Input picture width and height in units of luma samples, denoted herein by InitCroppedWidth[ idx ] and InitCroppedHeight[ idx ], respectively, of the candidate input pictures with index idx in the range of 0 to numCandInputPics - 1, inclusive, that may be used as input for the NNPFG.
- Luma sample array InitCroppedYPic[ idx ] and chroma sample arrays InitCroppedCbPic[ idx ] and InitCroppedCrPic[ idx ], when present, of the candidate input pictures with index idx in the range of 0 to numCandInputPics - 1, inclusive, that may be used as input for the NNPFG.
- Bit depth BitDepthY for the luma sample array of the candidate input pictures.
- Bit depth BitDepthC for the chroma sample arrays, if any, of the candidate input pictures.
- A chroma format indicator, denoted herein by ChromaFormatIdc
- When nnpfc_auxiliary inp_idc is equal to 1, a filtering strength control value array StrengthControlVal[ idx ] that shall contain real numbers in the range of 0 to 1, inclusive, of the candidate input pictures with index idx in the range of 0 to numCandInputPics - 1, inclusive.

Candidate input picture with index 0 corresponds to the picture for which the NNPFG is activated by this NNPFGA SEI message. Candidate input picture with index i in the range of 1 to numCandInputPics - 1, inclusive, precedes the candidate input picture with index i - 1 in output order. Let candInputPicList[ 0 ] be the list of candidate input pictures in inverse output order.

nnpfga_target_id indicates the target NNPFG, which is specified by the NNPFGC SEI message that pertains to the current picture and have nnpfgc_id equal to nnpfga_target_id.

The value of nnpfga_target_id shall be in the range of 0 to 2³² - 2, inclusive.

An NNPFGA SEI message with a particular value of nnpfga_target_id shall not be present in a current PU unless there is an NNPFGC SEI message with nnpfgc_id equal to the particular value of nnpfga_target_id and nnpfgc_grouping_type equal to 0 present in the current PU or in a PU that precedes the current PU in decoding order within the current CLVS.

When a PU contains both an NNPFGC SEI message with a particular value of nnpfgcid and an NNPFGA SEI message with nnpfga_target_id equal to the particular value of nnpfgc_id, the NNPFGC SEI message shall precede the NNPFGA SEI message in decoding order.

nnpfga_cancel_flag equal to 1 indicates that the persistence of the target NNPFG established by any previous NNPFGA SEI message with the same nnpfga_target_id as the current SEI message is cancelled, i.e., the target NNPFG is no longer used unless it is activated by another NNPFGA SEI message with the same nnpfga_target_id as the current SEI message and nnpfga_cancel_flag equal to 0. nnpfga_cancel_flag equal to 0 indicates that the target NNPFG is activated for use.

nnpfga_persistence_flag specifies the persistence of the target NNPFG for the current layer.

nnpfga_persistence_flag equal to 0 specifies that the target NNPFG may be used for post-processing filtering for the current picture only.

nnpfga_persistence_flag equal to 1 specifies that the target NNPFG may be used for post-processing filtering for the current picture and all subsequent pictures of the current layer in output order until one or more of the following conditions are true:
- A new CLVS of the current layer begins.
- The bitstream ends.
- A picture in the current layer associated with a NNPFGA SEI message with the same nnpfga_target_id as the current SEI message that follows the current picture in output order.

As a note, the target NNPFG is not applied for this subsequent picture in the current layer associated with a NNPFGA SEI message with the same nnpfga_target_id as the current SEI message.

Let the nnpfgcTargetPictures be the set of pictures to which the last NNPFGC SEI message with nnpfgc_id equal to nnpfga_target_id that precedes the current NNPFGA SEI message in decoding order pertains. Let nnpfgaTargetPictures be the set of pictures for which the target NNPFG is activated by the current NNPFGA SEI message. It is a requirement of bitstream conformance that any picture included in nnpfgaTargetPictures shall also be included in nnpfgcTargetPictures.

nnpfga_num_filters_minus2 plus 2 indicates the number of NNPFs in the NNPFG that this SEI message activates. The value of nnpfga num_filters_minus2 shall be equal to the value of nnpfgc_num_members_minus2 in an NNPFGC SEI message with nnpfgc_id equal to nnpfga_target_id.

nnpfga_target_base_flag[ i ] equal to l specifies that the i-th NNPF in the target NNPFG is the base NNPF with nnpfc_id equal to nnpfgc_member_id[ i ] in an NNPFGC SEI message with nnpfgc_id equal to nnpfga_target_id. nnpfga_target_base_flag[ i ] equal to 0 specifies that the i-th NNPF in the target NNPFG is the NNPF specified by the last NNPFC SEI message that has nnpfc_id equal to nnpfgc_member_id[ i ] in an NNPFGC SEI message with nnpfgc_id equal to nnpfga_target_id, precedes the first VCL NAL unit of the current picture in decoding order, and is not a repetition of the NNPFC SEI message that contains the base NNPF.

nnpfga_input_all_pics_[ i ] equal to 1 specifies that the input pictures to the i-th NNPF are selected from the list of candidate input pictures candInputPicList[ i ] without skipping. nnpfga_input_all_pics[ i ] equal to 0 specifies that the input pictures to the i-th NNPF are selected from the list of candidate input pictures candInputPicList[ i ] in a manner that some candidate input pictures are skipped.

nnpfga_num_input_pics_minus1[ i ] specifies the number of input pictures for the i-th NNPF in the target NNPFG. When present, nnpfga_num_input_pics_minus 1 [ i ] shall be equal to nnpfc_num_input_pics_minus1 for an NNPF with nnpfc_id equal to nnpfgc_member_id[ i ] of an NNPFGC SEI message with nnpfgc_id equal to nnpfga_target_id. When not present, nnpfga_num_input_pics_minus1 [ i ] is inferred to be equal to nnpfc_num_input_pics_minus1 for an NNPF with nnpfc_id equal to nnpfgc_member_id[ i ] in an NNPFGC SEI message with nnpfgc_id equal to nnpfga_target_id.

nnpfga_input_pic_skip_count[ i ] [ j ] specifies a j-th picture count that is skipped in the list of candidate input pictures candInputPicList[ i ] when selecting input pictures for the NNPF activated by the i-th loop entry. When nnpfga_input_pic_skip_count[ i ] [ j ] is not present, it is inferred to be equal to 0 for all values of j in the range of 0 to nnpfga_num_input_pics_minus1[ i ], inclusive. The variable numCandInputPics, which indicates the number of candidate input pictures to the NNPFG, is derived as Table 29.

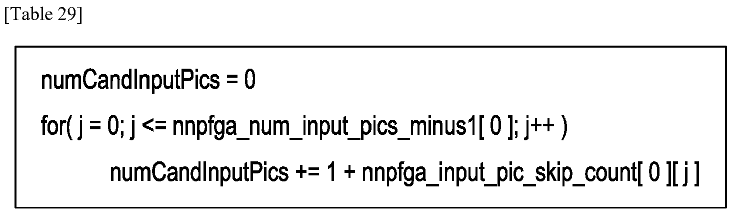

Let candInputPicList[ m ] for m in the range of 1 to nnpfga_num_filters_minus2 + 1, inclusive, be a list of pictures in inverse output order that is initially empty and formed in decreasing order of n in the range of 0 to m - 1, inclusive, by including each picture that is output by the NNPF process of the n-th loop entry that has no corresponding picture already present in candInputPicList[ m ], and lastly including each picture present in candInputPicList[ 0 ] that has no corresponding picture already present in candInputPicList[ m ].

When a candidate input picture candInputPicList[ m ][ idx ] for any value of m in the range of 1 to nnpfga_num_filters_minus2 + 1, inclusive, is an NNPF output picture of the n-th NNPF process with the value of n being less than the value of m, the width and height of the candidate input picture are respectively equal to nnpfcOutputPicWidth and nnpfcOutputPicHeight of the NNPF output picture.

The list of input pictures inputPicList[ m ] to the NNPF of the m-th loop entry is derived as Table 30.

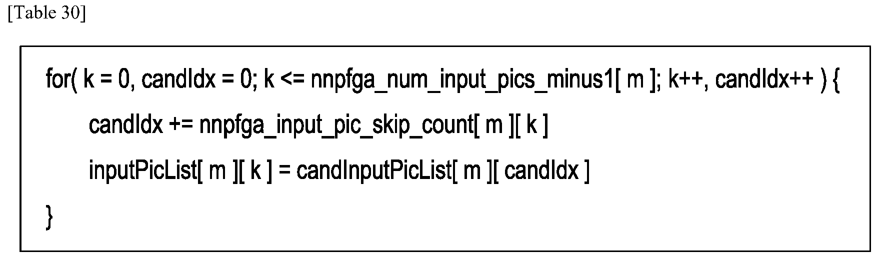

It is a requirement of bitstream conformance that candIdx shall not exceed the number of pictures in candInputPicList[ m ].

It is a requirement of bitstream conformance that the pictures present in inputPicList[ m ], for any value of m in the range of 1 to nnpfga_num_filters_minus2 + 1, inclusive, shall have the same width, height, bit depth, and chroma format.

For purposes of interpretation of the NNPFC SEI message with nnpfc_id equal to nnpfgc_member_id[ i ] in an NNPFGC SEI message with nnpfgc_id equal to nnpfga_target_id, the following variables are specified for the i-th loop entry:
- The variables BitDepthY, BitDepthC, and ChromaFormatIdc are used as provided for the interpretation of this SEI message.
- CroppedWidth and CroppedHeight are set equal to the width and height of the pictures in inputPicList[ i ], respectively, in units of luma samples.
- For each input picture k in the range of 0 to nnpfga_num_input_pics_minus1[ i ], inclusive, the following applies:
   - CroppedYPic[ k ], CroppedCbPic[ k ], and CroppedCrPic[ k ], when present, are set equal to respective sample array of inputPicList[ i ][ k ]
   - When nnpfc_auxiliary_inp_idc is equal to 1 for the NNPF with nnpfc_id equal to nnpfgc_member_id[ i ] in an NNPFGC SEI message with nnpfgc_id equal to nnpfga_target_id, the following applies:
      - It is a requirement of bitstream conformance that inputPicList[ i ][ k ] is the same as candInputPicList[ 0 ][ idx ] for any value of idx in the range of 0 to numCandInputPics - 1, inclusive.
      - StrengthControlVal[ k ] is set equal to InitStrengthControlVal[ idx ].

nnpfga_num_num_output_entries[ i ] specifies the number of nnpfga_output_flag[ i ][ j ] syntax elements present in the NNPFGA SEI message. The value of nnpfga_num_output_entries[ i ] shall be in the range of 0 to NumInpPicsInOutputTensor, inclusive, for an NNPF with nnpfc_id equal to nnpfgc_member_id[ i ] of an NNPFGC SEI message with nnpfgc_id equal to nnpfga_target_id..

nnpfga_output_flag[ i ][ j ] equal to 1 specifies that the NNPF-generated picture that corresponds to the input picture having index InpIdx[ j ] derived for the i-th NNPF of the target NNPFG is output by the NNPF process activated by this loop entry, where the NNPF process is specified in the semantics of the NNPFC SEI message. nnpfga_output_flag[ i ][ j ] equal to 0 specifies that the NNPF-generated picture that corresponds to the input picture having index InpIdx[ j ] derived for the i-th NNPF of the target NNPFG is not output by the NNPF process activated by this loop entry. When nnpfga_num_output_entries[ i ] is less than NumInpPicsInOutputTensor derived for the i-th NNPF of the target NNPFG, nnpfga_output_flag[ i ][ j ] is inferred to be equal to 1 for each value of i in the range of nnpfga_num_output_entries[ i ] to NumInpPicsInOutputTensor - 1, inclusive.

Let NnpfgaOutputPicList, which is the list of pictures output by NNPF process of the NNPFG in output order, be initially empty and formed in decreasing order of n in the range of 0 to nnpfga_num_filters_minus2 + 1, inclusive, by including each picture that is output by the NNPF process of the n-th loop entry that has no corresponding picture already present in NnpfgaOutputPicList.

Source Picture Timing Information (SPTI)

Table 31 shows an example of the SPTI syntax.

**[Table 31]**

| | |
|---|---|
| source_picture_timing_info( payloadSize ) { | **Descriptor** |
| **spti_cancel_flag** | u(1) |
| if( !spti_cancel_flag ) { | |
| **spti_persistence_flag** | u(1) |
| **spti_source_timing_equals_output_timing_flag** | u(1) |
| if( !spti_source_timing_equals_output_timing_flag ) { | |
| **spti_source_type_present_flag[** | u(1) |
| if( spti_source_type_present_flag ) | |
| **spti_source_type** | u(16) |
| **spti_time_scale** | u(32) |
| **spti_num_units_in_elemental_interval** | u(18) |
| if( **spti_persistence_flag** ) | |
| **spti_max_sublayers_minus_1** | u(3) |
| for( i = 0; i <= spti_max_sublayers_minus1; i++ ) { | |
| **spti_sublayer_interval_scale_factor**[ i ] | ue(v) |
| **spti_sublayer_synthesized_picture_flag[** i ] | u(1) |
| } | |
| } | |
| } | |
| } | |

The source picture timing information (SPTI) SEI message indicates the temporal distance between source pictures associated with the corresponding decoded output pictures prior to encoding, e.g., for camera-captured content, the temporal distance between source pictures is the difference between the time at which an image sensor was exposed to produce a source picture associated with the current decoded picture and the time at which the image sensor was exposed to produce the source picture associated with a previous decoded picture in output order. The information provided by the SPTI SEI message pertains only for picture(s) starting from the picture in the current layer in the access unit that contains the SPTI SEI message and all subsequent pictures of the current layer in output order based on its persistence.

spti_cancel_flag equal to 1 indicates that the SPTI SEI message cancels the persistence of any previous SPTI SEI message in output order that applies to the current layer. spti_cancel_flag equal to 0 indicates that source picture timing information follows.

spti_persistence_flag specifies the persistence of the SPTI SEI message for the current layer.

spti_persistence_flag equal to 0 specifies that the SPTI SEI message applies to the current decoded picture only.

spti_persistence_flag equal to 1 specifies that the SPTI SEI message applies to the current decoded picture and persists for all subsequent pictures of the current layer in output order until one or more of the following conditions are true:
- A new CLVS of the current layer begins.
- The bitstream ends.
- A picture in the current layer in an AU associated with an SPTI SEI message is output that follows the current picture in output order.

spti_source_timing_equals_output_timing_flag equal to 1 indicates the timing of source pictures is the same as the timing of corresponding decoded output pictures. spti_source_timing_equals_output_timing _flag equal to 0 indicates the timing of source pictures might not be the same as the timing of corresponding decoded output pictures.

When spti_source_timing_equals_output_timing_flag is equal to 1 and a picture timing SEI message is present for the current picture, source picture timing could be determined from information conveyed in the picture timing SEI message.

spti_source_type_present_flag equal to 1 indicates the syntax element spti_source_type is present in the SEI message. spti_source_type_present_flag equal to 0 indicates the syntax element spti_source _type is not present in the SEI message.

spti_source_type indicates the timing relationship between source pictures and corresponding decoded output pictures as specified in Table 32.

**[Table 32]**

| **bitMask** | **Interpretation** |
|---|---|
| 0x01 | Slow motion: The absolute value of the temporal distance between consecutive source pictures is likely to be less than the temporal distance between corresponding decoded output pictures. |
| 0x02 | Sped-up motion: The absolute value of the temporal distance between consecutive source pictures is likely to be greater than the temporal distance between corresponding decoded output pictures. |
| 0x04 | High-speed imaging: The absolute value of the temporal distance between consecutive source pictures is likely to be less than 1/120 seconds. |
| 0x08 | Time-lapse imaging: The temporal distance between source pictures is likely to be greater than 1.001/24 seconds. |
| 0x10 | Temporal reversal: The absolute value of the temporal distance between consecutive source pictures is indicated to be negative (i.e., decoded pictures are output in reverse temporal order relative to the timing of the corresponding source pictures). |
| 0x20 | Still image / freeze frame: The temporal distance between source pictures is likely to be 0 (i.e., two or more decoded pictures are likely to represent the same source picture). |
| 0x40 | Sporadic or event-driven: The temporal distance between source pictures is likely to be non-constant. |

Here, ( spti_source_type & bitMask ) not equal to 0 indicates that the timing relationship has the interpretation associated with the bitMask value in Table 1. When spti_source_type is greater than 0 and ( spti_source_type & bitMask ) is equal to 0, the interpretation associated with the bitMask value is not applicable to the SPTI SEI message. When spti_source_type is equal to 0, the timing relationship may be specified by the application.

The value of spti_source_type shall be in the range of 0 to 127, inclusive, in bitstreams conforming to this document. Values of 128 to 255, inclusive, for spti_source_type are reserved for future use by ITU-T | ISO/IEC and shall not be present in bitstreams conforming to this edition of this document. Decoders conforming to this edition of this document shall ignore SPTI SEI messages with spti_source_type in the range of 128 to 255, inclusive.

The value of ( spti_source_type & 0x04 ) & ( spti_source_type & 0x08 ) shall be zero (i.e., spti_source_type shall not simultaneously indicate high-speed imaging and time-lapse imaging).

spti_time_scale specifies the number of time units that pass in one second. The value of spti_time_scale shall not be equal to 0. For example, a time coordinate system that measures time using a 27 MHz clock has an spti_time_scale of 27,000,000.

spti_num_units_in_elemental_interval specifies the number of time units of a clock operating at the frequency spti_time_scale Hz that corresponds to the indicated elemental source picture interval of consecutive pictures in output order in the CLVS.

The indicated elemental source picture interval, also to be denoted by the variable ElementalSourcePictureInterval, in units of seconds, is equal to the quotient of spti_num_units_in_elemental_interval divided by spti_time_scale. For example, to represent an elemental source picture interval equal to 0.04 seconds, spti_time_scale may be equal to 27,000,000 and spti_num_units_in_elemental_interval may be equal to 1,080,000.

spti_max_sublayers_minus_1 plus 1 specifies the maximum number of temporal sublayers for which picture interval scale factor (spti_sublayer_interval_scale_factor[ i ]) and synthesized flag (spti_sublayer_synthesized_picture_flag[ i ]) information is signalled. When spti_max_sublayers_minus_1 is not present, it is inferred to be equal to TemporalId..

spti_sublayer_interval_scale_factor[ i ], when present, specifies a scale factor used in determining the source picture interval of corresponding consecutive pictures in output order in the CLVS having TemporalId less than or equal to i. The value 0 may be used to indicate that the source picture corresponding to the current decoded output picture is identical to the source picture corresponding to the previous decoded output picture.

The indicated source picture interval associated with output pictures having TemporalId less than or equal to i, denoted by the variable SourcePictureInterval[ i ], in units of seconds, is derived as Table 33.

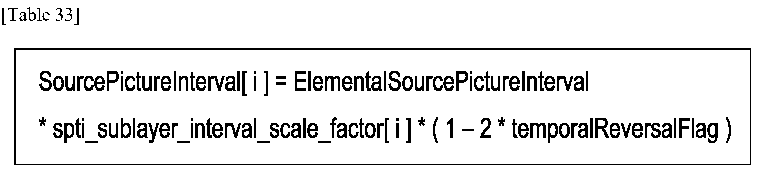

The variable temporalReversalFlag is equal to ( spti_source_type & 0x10 )? 1 : 0.

spti_sublayer_synthesized_picture_flag[ i ], when present, equal to 1 indicates that decoded output pictures belonging to the ith temporal sublayer are synthesized and do not correspond to unmodified original source pictures. spti_sublayer_synthesized_picture_flag[ i ] equal to 0 provides no such indication. When not present, the value of spti_sublayer_synthesized_picture_flag[ i ] is inferred to be equal to 0.

As a note, when the TemporalId of an SPTI SEI message is greater than 0, and the SPTI SEI message persists for one or more pictures with lower TemporalId, an encoder can repeat the information of the SPTI SEI message by including it in one or more SPTI SEI messages with lower TemporalId, in order to avoid loss of information when pictures in temporal sublayer(s) are lost or removed.

### Problem(s)

The SEI message is vulnerable from being dropped by media-aware network elements (MANEs) during transport from sender to receiver. While SEI messages are usually optional, some applications may rely on them so that the dropping of SEI messages needed by the application at receive side may cause problem.

Several solutions have been proposed in JVET-AF0149, which includes assigning new NAL unit types for important / application-required SEI message or defining a new prefix NAL unit that indicates that NAL units (i.e., may be SEI message or other type of NAL units) that follow the prefix NAL unit are important and should not be dropped. However, these proposed solutions seem to be overkill as NAL unit types are usually limited and better used to indicate more important feature(s).

If our concern is about SEIs that should not be randomly dropped by MANEs, we may use the opportunity of designing the new SEI data structure as we try to address the issue of large SEI payload to address this issue as well using the same solution space by designing a new SEI RBSP and SEI message structure as shown in table 34 and table 35 below.

**[Table 34]**

| | |
|---|---|
| vsei_rbsp( ) { | **Descriptor** |
| versatile_sei_message() | |
| rbsp_trailing_bits( ) | |
| i = 0 | |
| } | |

Versatile Supplemental enhancement information RBSP contains information that is not necessary to decode the samples of coded pictures from VCL NAL units. A VSEI RBSP contains one VSEI message.

**[Table 35]**

| | |
|---|---|
| versatile_sei_message( ) { | **Descriptor** |
| **vsei_payload_type_byte** | u(8) |
| vsei_payload( vseiPayloadType ) | |
| } | |

Versatile Supplemental enhancement information RBSP contains information that is not necessary to decode the samples of coded pictures from VCL NAL units. A VSEI RBSP contains one VSEI message.

vsei_payload_type_byte is a byte of the payload type of a versatile SEI message.

For signalling the importance of the SEI, we may include a flag in the beginning of the new SEI message structure to indicate the importance of the SEI message. Including importance information in the beginning of the new SEI message structure aligns well with the design suggested in section 2.1 above such that one SEI RBSP contains one SEI message. We may not want to combine an important SEI message with other (less important) SEI message(s) in the same SEI RBSP.

### Embodiments

The present disclosure provides a solution to the problem described above. Each embodiment may be performed individually or two or more embodiments may be performed in combination with each other.

The embodiments proposed by the present disclosure are summarized below:
- allocating the first byte of SEI message data structure for signalling information that may be important to be accessible for entities other than the decoder such as MANEs or any other system interfaces.
   - assigning one flag to indicate whether the SEI message is important / application-required so that it should not be randomly remove while the rest 7 bits are reserved.
- Alternatively, allocating the first byte of SEI RBSP for signalling information that may be important to be accessible for entities other than the decoder such as MANEs or any other system interfaces.

### Embodiment 1

Embodiment 1 provides details on the aforementioned Summary 1. The following Table 36 may be proposed.

**[Table 36]**

| | |
|---|---|
| versatile_sei_message( ) { | **Descriptor** |
| **vsei_importance** | u(1) |
| **vsei_reserved** | u(7) |
| **vsei_payload_type_byte** | u(8) |
| vsei_payload( vseiPayloadType ) | |
| } | |

Versatile Supplemental enhancement information RBSP contains information that is not necessary to decode the samples of coded pictures from VCL NAL units. A VSEI RBSP contains one VSEI message.

Each versatile SEI message consists of the variables specifying the importance and type payloadType of the SEI message payload. Versatile SEI message payloads are specified in XXX.

As a note, the NAL unit byte sequence containing the SEI message might include one or more emulation prevention bytes (represented by emulation_prevention_three_byte syntax elements).

vsei_importance equal 1 indicates that the versatile SEI message may be an important or required. Vsei_importance equal 0 indicates that the versatile SEI message does not have particular importance.

As a note, entity that is aware of this flag may use this information when it needs to make decision whether or not to deliver / drop the verstatile SEI message.

vsei_reserved is reserved for future use and shall be ignored.

vsei_payload_type_byte is a byte of the payload type of a versatile SEI message.

### Embodiment 2

Embodiment 2 provides details on the aforementioned Summary 2. The following Table 37 may be proposed.

**[Table 37]**

| | |
|---|---|
| vsei_rbsp( ) { | **Descriptor** |
| **vsei_importance** | u(1) |
| **vsei_reserved** | u(7) |
| versatile_sei_message() | |
| rbsp_trailing_bits( ) | |
| } | |

Versatile Supplemental enhancement information RBSP contains information that is not necessary to decode the samples of coded pictures from VCL NAL units. A VSEI RBSP contains one VSEI message.

Each versatile SEI RBSP consists of the variables specifying the importance of the SEI message payload.

vsei_importance equal 1 indicates that the versatile SEI message may be an important or required. Vsei_importance equal 0 indicates that the versatile SEI message does not have particular importance.

As a note, entity that is aware of this flag may use this information when it needs to make decision whether or not to deliver / drop the verstatile SEI message.

vsei_reserved is reserved for future use and shall be ignored.

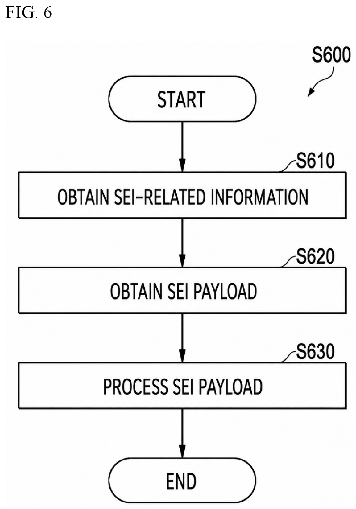

FIG. 6 is a diagram illustrating a method of decoding image information according to an embodiment of the present disclosure.

The terms or names described in FIG. 6 (e.g., names of syntax elements or variables) are merely examples, and the technical features of the present disclosure are not limited to the terms described in FIG. 6. For example, the image information described in FIG. 6 may comprise various information according to the embodiments described in the present disclosure, and may comprise information described in at least one of the tables described above.

The decoding method (S600) may comprise the following operations. The following operations do not constitute essential components of the decoding method according to an embodiment, and at least some of the following operations may be omitted or other operations may be added. In addition, the following operations may be performed by a decoding apparatus comprising a memory and a processor electrically coupled to the memory, and may be performed by, for example, the processor.

The decoding apparatus may obtain SEI (supplemental enhancement information) related information (S610).

As an example, the processor included in the decoding apparatus may obtain image information comprising SEI related information.

The SEI related information may take various forms and may be expressed by various names. For example, the SEI related information may be a syntax element or a syntax structure comprising one or more syntax elements. In addition, the SEI related information may be an RBSP (raw byte sequence payload) comprising one or more syntax elements or one or more syntax structures. For example, the SEI related information may be variously expressed as sei_rbsp( ), vsei_rbsp( ), versatile_sei_rbsp( ), or the like, but is not limited thereto.

The SEI related information may be conveyed in a NAL (network abstraction layer) unit. Specifically, the SEI related information may be conveyed in two different NAL unit types. For example, the SEI related information may be conveyed in a prefix SEI NAL unit type (prefix_sei_nut or prefix_vsei_nut) and a suffix SEI NAL unit type (suffix_sei_nut or suffix_vsei_nut), but is not limited thereto.

The SEI related information may comprise an SEI message. In particular, the SEI related information may comprise only one SEI message. For example, the SEI related information may comprise information that is not needed for decoding samples of pictures coded in VCL NAL units.

The SEI message may be a syntax element or a syntax structure comprising one or more syntax elements. For example, the SEI message may be variously expressed as sei_message( ), vsei_message( ), versatile_sei_message( ), or the like, but is not limited thereto.

SEI importance information may be provided in the SEI related information or the SEI message. The SEI importance information may indicate whether removal of the SEI related information or the SEI message from a bitstream is prohibited or permitted.

The SEI message may be removed by a network entity other than the decoding apparatus while being conveyed from a transmitter to a receiver. Since the SEI message is generally optional, dropping (or removal) of the SEI message may not cause problems. However, when some applications on the receiving side depend on the SEI message, dropping (or removal) of the SEI message required by an application on the receiving side may cause problems.

In order to prevent dropping (or removal) of the SEI message or SEI related information required by an application on the receiving side, SEI importance information that prohibits or permits dropping (or removal) of the SEI message or SEI related information may be added.

The SEI importance information may be a syntax element or a syntax structure comprising one or more syntax elements. For example, the SEI importance information may be variously expressed as sei_importance, vsei_importance, versatile_sei_importance, or the like, but is not limited thereto.

When the value of the SEI importance information is 1, it may specify that the SEI message is important or is an SEI message required by an application on the receiving side. When the value of the SEI importance information is 1, dropping (or removal) of the SEI message or SEI related information may be prohibited. In addition, when the value of the SEI importance information is 0, dropping (or removal) of the SEI message or SEI related information may not be prohibited.

However, the present disclosure is not limited thereto. For example, when the value of the SEI importance information is 1, dropping (or removal) of the SEI message or SEI related information may be permitted, and when the value of the SEI importance information is 0, dropping (or removal) of the SEI message or SEI related information may not be permitted.

The SEI importance information may be added to the SEI related information or the SEI message.

For example, the SEI importance information may be added to the SEI related information. The SEI importance information may be placed first in the SEI related information. More specifically, the SEI importance information may comprise an SEI importance flag placed at a first bit in the SEI related information or an SEI importance indicator placed at a first byte in the SEI related information. Seven or fewer bits following the SEI importance flag or the SEI importance indicator may be reserved for other uses or ignored.

As another example, the SEI importance information may be added to the SEI message. The SEI importance information may be placed first in the SEI message. More specifically, the SEI importance information may comprise an SEI importance flag placed at a first bit in the SEI message or an SEI importance indicator placed at a first byte in the SEI message. Seven or fewer bits following the SEI importance flag or the SEI importance indicator may be reserved for other uses or ignored.

The decoding apparatus may obtain an SEI payload (S620).

As an example, the processor of the decoding apparatus may obtain an SEI payload from the SEI message. The SEI message may comprise an SEI payload and SEI payload type information.

The SEI payload may comprise information accompanying an image (e.g., personal information, copyright information, etc.), information related to pre-processing of the image, information related to post-processing of the image, or information related to the purpose of use of the image.

The SEI payload may be a syntax element or a syntax structure comprising one or more syntax elements. For example, the SEI payload may be variously expressed as sei_payload( ), vsei_payload( ), or the like, but is not limited thereto.

The SEI payload type information may indicate the type of the SEI payload.

The SEI payload type information may be a syntax element or a syntax structure comprising one or more syntax elements. For example, the SEI payload type information may be expressed as sei_payload_type, sei_payload_type_byte, vsei_payload _type, vsei_payload_type_byte, or the like, but is not limited thereto.

For example, the SEI message may not comprise information indicating the size of the SEI payload. Thereby, potential complexity/latency when the encoder handles the generation of the corresponding SEI can be avoided.

The decoding apparatus may process the SEI payload (S630).

As an example, the processor of the decoding apparatus may process the SEI payload of the SEI message.

As described above, SEI importance information may be added to the SEI related information or the SEI message. Thereby, dropping (or removal) of the SEI related information or the SEI message by a network entity other than the decoding apparatus can be prevented, and problems that may occur on the receiving side due to dropping (or removal) of the SEI message can also be prevented.

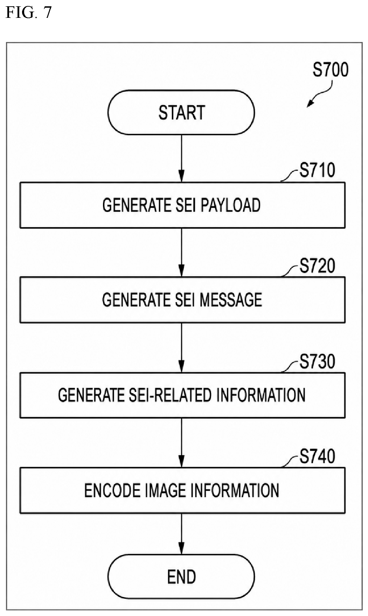

FIG. 7 is a diagram illustrating a method of encoding image information according to an embodiment of the present disclosure.

The terms or names described in FIG. 7 (e.g., names of syntax elements or variables) are merely examples, and the technical features of the present disclosure are not limited to the terms described in FIG. 7. For example, the image information described in FIG. 7 may comprise various information according to the embodiments described in the present disclosure, and may comprise information described in at least one of the tables described above.

The encoding method (S700) may comprise the following operations. The following operations do not constitute essential components of the encoding method according to an embodiment, and at least some of the following operations may be omitted or other operations may be added. In addition, the following operations may be performed by an encoding apparatus comprising a memory and a processor electrically coupled to the memory, and may be performed by, for example, the processor.

As an example, the processor of the encoding apparatus may generate an SEI payload.

The SEI payload may comprise information accompanying an image (e.g., personal information, copyright information, etc.), information related to pre-processing of the image, information related to post-processing of the image, or information related to the purpose of use of the image.

The SEI payload may be a syntax element or a syntax structure comprising one or more syntax elements. For example, the SEI payload may be variously expressed as sei_payload( ), vsei_payload( ), or the like, but is not limited thereto.

The encoding apparatus may generate an SEI message (S720).

As an example, the processor of the encoding apparatus may generate an SEI message comprising the SEI payload.

The SEI message may be a syntax element or a syntax structure comprising one or more syntax elements. For example, the SEI message may be variously expressed as sei_message( ), vsei_message( ), versatile sei_message( ), or the like, but is not limited thereto.

The SEI message may further comprise SEI payload type information. The SEI payload type information may indicate the type of the SEI payload.

The SEI payload type information may be a syntax element or a syntax structure comprising one or more syntax elements. For example, the SEI payload type information may be expressed as sei_payload _type, sei_payload _type_byte, vsei_payload _type, vsei_payload_type_byte, or the like, but is not limited thereto.

For example, the SEI message may not comprise information indicating the size of the SEI payload. Thereby, potential complexity/latency when the encoder handles the generation of the corresponding SEI can be avoided.

The encoding apparatus may generate SEI related information (S730).

As an example, the processor of the encoding apparatus may generate SEI related information comprising the SEI message.

The SEI related information may take various forms and may be expressed by various names.

For example, the SEI related information may be a syntax element or a syntax structure comprising one or more syntax elements. In addition, the SEI related information may be an RBSP (raw byte sequence payload) comprising one or more syntax elements or one or more syntax structures. For example, the SEI related information may be variously expressed as sei_rbsp( ), vsei_rbsp( ), versatile_sei_rbsp( ), or the like, but is not limited thereto.

The SEI related information may be conveyed in a NAL (network abstraction layer) unit. Specifically, the SEI related information may be conveyed in two different NAL unit types. For example, the SEI related information may be conveyed in a prefix SEI NAL unit type (prefix_sei_nut or prefix_vsei_nut) and a suffix SEI NAL unit type (suffix_sei_nut or suffix_vsei_nut), but is not limited thereto.

The SEI related information may comprise an SEI message. In particular, the SEI related information may comprise only one SEI message. For example, the SEI related information may comprise information that is not needed for decoding samples of pictures coded in VCL NAL units.

SEI importance information may be provided in the SEI related information or the SEI message. The SEI importance information may indicate whether removal of the SEI related information or the SEI message from a bitstream is prohibited or permitted.

The SEI message may be removed by a network entity other than the decoding apparatus while being conveyed from a transmitter to a receiver. Since the SEI message is generally optional, dropping (or removal) of the SEI message may not cause problems. However, when some applications on the receiving side depend on the SEI message, dropping (or removal) of the SEI message required by an application on the receiving side may cause problems.

In order to prevent dropping (or removal) of the SEI message or SEI related information required by an application on the receiving side, SEI importance information that prohibits or permits dropping (or removal) of the SEI message or SEI related information may be added.

The SEI importance information may be a syntax element or a syntax structure comprising one or more syntax elements. For example, the SEI importance information may be variously expressed as sei_importance, vsei_importance, versatile_sei_importance, or the like, but is not limited thereto.

When the value of the SEI importance information is 1, it may specify that the SEI message is important or is an SEI message required by an application on the receiving side. When the value of the SEI importance information is 1, dropping (or removal) of the SEI message or SEI related information may be prohibited. In addition, when the value of the SEI importance information is 0, dropping (or removal) of the SEI message or SEI related information may not be prohibited.

However, the present disclosure is not limited thereto. For example, when the value of the SEI importance information is 1, dropping (or removal) of the SEI message or SEI related information may be permitted, and when the value of the SEI importance information is 0, dropping (or removal) of the SEI message or SEI related information may not be permitted.

The SEI importance information may be added to the SEI related information or the SEI message.

For example, the SEI importance information may be added to the SEI related information. The SEI importance information may be placed first in the SEI related information. More specifically, the SEI importance information may comprise an SEI importance flag placed at a first bit in the SEI related information or an SEI importance indicator placed at a first byte in the SEI related information. Seven or fewer bits following the SEI importance flag or the SEI importance indicator may be reserved for other uses or ignored.

As another example, the SEI importance information may be added to the SEI message. The SEI importance information may be placed first in the SEI message. More specifically, the SEI importance information may comprise an SEI importance flag placed at a first bit in the SEI message or an SEI importance indicator placed at a first byte in the SEI message. Seven or fewer bits following the SEI importance flag or the SEI importance indicator may be reserved for other uses or ignored.

The encoding apparatus may encode image information comprising the SEI related information (S740).

As an example, the processor of the encoding apparatus may encode the image information comprising the SEI related information.

As described above, SEI importance information may be added to the SEI related information or the SEI message. Thereby, dropping (or removal) of the SEI related information or the SEI message by a network entity other than the decoding apparatus can be prevented, and problems that may occur on the receiving side due to dropping (or removal) of the SEI message can also be prevented.

The image information comprising the SEI related information encoded according to the encoding method (S700) described above may be stored in a computer-readable storage medium. The image information comprising the SEI related information may be transmitted through a transmitter and/or a transmission medium.

As described above, a conventional SEI message or SEI related information may be dropped (or removed) by a network entity other than the decoding apparatus. In this case, if some applications on the receiving side depend on the SEI message, dropping (or removal) of the SEI message required by an application on the receiving side may cause problems. In order to prevent dropping (or removal) of the SEI message or SEI related information required by an application on the receiving side, SEI importance information that prohibits or permits dropping (or removal) of the SEI message or SEI related information may be added. A network entity other than the decoding apparatus may refer to the SEI importance information comprised in the SEI message or SEI related information to determine whether to drop (or remove) or forward the SEI message or SEI related information.

Thereby, dropping (or removal) of the SEI message required by an application on the receiving side by a network entity other than the decoding apparatus can be prevented. Furthermore, problems on the receiving side that may occur due to dropping (or removal) of the SEI message required by an application on the receiving side can be prevented.

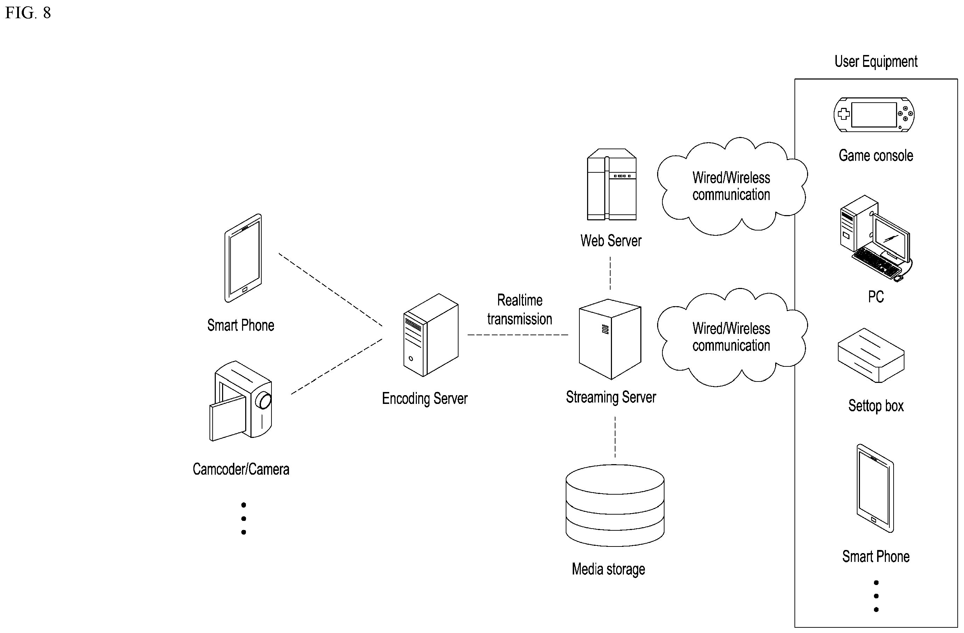

FIG. 8 is a diagram exemplarily illustrating a content streaming system to which an embodiment according to the present disclosure may be applied.

As illustrated in FIG. 8, the content streaming system to which an embodiment of the present disclosure is applied may largely include an encoding server, a streaming server, a web server, a media storage, a user device, and a multimedia input device.

The encoding server serves to compress content input from multimedia input devices such as a smartphone, a camera, and a camcorder into digital data to generate a bitstream and transmit it to the streaming server. As another example, when multimedia input devices such as a smartphone, a camera, and a camcorder directly generate a bitstream, the encoding server may be omitted.

The bitstream may be generated by an image encoding method and/or an encoding apparatus to which an embodiment of the present disclosure is applied, and the streaming server may temporarily store the bitstream in the process of transmitting or receiving the bitstream.

The streaming server transmits multimedia data to the user device based on a user request through the web server, and the web server may serve as an intermediary to inform the user of what services are available. When the user requests a desired service from the web server, the web server delivers it to the streaming server, and the streaming server may transmit multimedia data to the user. At this time, the content streaming system may include a separate control server, and in this case, the control server may serve to control commands/responses between respective devices in the content streaming system.

The streaming server may receive content from the media storage and/or the encoding server. For example, when content is received from the encoding server, the content may be received in real time. In this case, in order to provide a smooth streaming service, the streaming server may store the bitstream for a certain period of time.

Examples of the user device may include a mobile phone, a smart phone, a laptop computer, a digital broadcasting terminal, a personal digital assistant (PDA), a portable multimedia player (PMP), a navigation, a slate PC, a tablet PC, an ultrabook, a wearable device (e.g., a smartwatch, a smart glass, or a head mounted display (HMD)), a digital TV, a desktop computer, digital signage, and the like.

Each server in the content streaming system may be operated as a distributed server, and in this case, data received from each server may be processed in a distributed manner.

The scope of the present disclosure includes software or machine-executable instructions (e.g., an operating system, an application, firmware, a program, etc.) that cause operations according to methods of various embodiments to be executed on a device or computer, and a non-transitory computer-readable medium in which such software or instructions are stored and executable on a device or computer.

### [Industrial Applicability]

An embodiment according to the present disclosure may be used to encode/decode image information.

## Claims

1. A method of decoding image information, comprising:
obtaining the image information comprising SEI (supplemental enhancement information) related information, the SEI related information comprising SEI importance information and an SEI message; and
obtaining an SEI payload of the SEI message,
wherein the SEI importance information indicates whether removal of the SEI message from a bitstream is prohibited.

2. The method of claim 1, wherein the SEI importance information is placed first in the SEI related information.

3. The method of claim 1, wherein the SEI importance information comprises an SEI importance flag placed at a first bit in the SEI related information.

4. The method of claim 1, wherein the SEI importance information is included in the SEI message.

5. The method of claim 1, wherein the SEI importance information comprises an SEI importance flag placed at a first bit in the SEI message.

6. A method of encoding image information, comprising:
generating an SEI (supplemental enhancement information) payload;
generating an SEI message comprising the SEI payload;
generating SEI related information comprising the SEI message, the SEI related information comprising SEI importance information and the SEI message; and
encoding the image information comprising the SEI related information,
wherein the SEI importance information indicates whether removal of the SEI message from a bitstream is prohibited.

7. The method of claim 6, wherein the SEI importance information is placed first in the SEI related information.

8. The method of claim 7, wherein the SEI importance information comprises an SEI importance flag placed at a first bit in the SEI related information.

9. A method of storing a bitstream of image information, comprising:
obtaining the bitstream of the image information; and
storing data comprising the bitstream in a computer-readable storage medium,
wherein the image information comprises SEI (supplemental enhancement information) related information,
wherein the SEI related information comprises SEI importance information and an SEI message, and
wherein the SEI importance information indicates whether removal of the SEI message from the bitstream is prohibited.

10. A method of transmitting a bitstream of image information, comprising:
obtaining the bitstream of the image information; and
transmitting data comprising the bitstream,
wherein the image information comprises SEI (supplemental enhancement information) related information,
wherein the SEI related information comprises SEI importance information and an SEI message, and
wherein the SEI importance information indicates whether removal of the SEI message from the bitstream is prohibited.
